# EUROPEAN PATENT SPECIFICATION

(11) **EP 4 435 304 B1**
(45) Date of publication and mention of the grant of the patent: **07.10.2026**
(21) Application number: 22895371.7
(22) Date of filing: 26.10.2022
(51) Int. Cl.: F25B 41/35, H02K 37/14, H02K 7/14, F16K 31/04

(54) **ELECTRIC VALVE**
ELEKTRISCHES VENTIL
SOUPAPE ÉLECTRIQUE

(30) Priority: 18.11.2021 JP 2021188146
(43) Date of publication of application: 25.09.2024
(73) Proprietor: Fujikoki Corporation, Tokyo 158-0082 (JP)
(72) Inventor: YAZAWA Masashi, Tokyo 158-0082 (JP); SUGANUMA Takeshi, Tokyo 158-0082 (JP)
(74) Representative: Ter Meer und Partner mbB
(86) International application number: PCT/JP2022/039837
(87) International publication number: WO 2023/090087

(56) References cited:
- WO-A1-2004/003414
- CN-Y- 2 913 772
- JP-A- 2008 178 291
- JP-A- 2011 208 729
- JP-A- 2012 062 961
- JP-A- 2019 219 048

## Description

### Technical Field

The present invention relates to an electric valve.

### Background Art

Patent Literature 1 discloses an example of an electric valve according to the related art. The electric valve is installed in a refrigeration cycle system of an air conditioner. The electric valve includes a valve body, a valve member, and a stepping motor for moving the valve member. The stepping motor includes a rotor and a stator. The rotor rotates in response to pulses input to the stepping motor. The valve member moves along with the rotation of the rotor, and the movement of the valve member changes an opening degree of a valve port of the valve body. When the rotor is at a reference position, a movable stopper fixed to the rotor is in contact with a fixed stopper fixed to the valve body, thereby restricting the rotation of the rotor in a first direction. Pulses to be input to the stepping motor correspond to states (excitation patterns) of drive currents to be supplied to the stator. The number of the excitation patterns is defined according to a configuration of the stepping motor. Pulses corresponding to the excitation patterns are input to the stepping motor sequentially and cyclically.

The electric valve is controlled by an electric valve control device. The electric valve control device, in an initialization operation, inputs pulses to the stepping motor to rotate the rotor in the first direction and positions the rotor at the reference position. Then, the electric valve control device inputs a predetermined number of pulses to the stepping motor to rotate the rotor in a second direction and positions the rotor at a valve opening position. The electric valve control device inputs pulses to the stepping motor starting from a pulse corresponding to a specific excitation pattern when positioning the rotor from the reference position to the valve opening position. When the rotor is positioned at the valve opening position, the valve port has the opening degree of a predetermined value.

JP 2011-208729 A discloses an electric valve preventing a fitting failure of a stator to a can when fitting the stator to a valve body and preventing removal of the stator from the valve body by easily, accurately and surely fitting the stator to the can.

### Citation List

### Patent Literature

Patent Literature 1: Japanese Unexamined Patent Application Publication No. 2020-16247

### Summary of Invention

### Technical Problem

In manufacturing the electric valve, the valve body assembly including the valve body and the rotor is manufactured separately from the stator unit including the stator. Then, the stator unit is assembled with the valve body assembly. Electric valves are manufactured such that each of the electric valves has the same number of pulses (a valve opening pulse number) required to rotate the rotor from the reference position to the valve opening position. However, depending on accuracy of components or accuracy of assembling components, the stator may deviate from its correct position around an axis with respect to the valve body assembly when the stator unit is mounted on the valve body. This causes the rotor to deviate from its correct position around the axis when the electric valve control device inputs pulses starting from the pulse corresponding to the specific excitation pattern and positions the rotor from the reference position to the valve opening position. As a result, there may be a variation in the valve opening pulse number among the electric valves.

Accordingly, it is an object of the present invention to provide an electric valve capable of decreasing the variation in the valve opening pulse number.

### Solution to Problem

To achieve the object described above, an electric valve according to an aspect of the present invention includes a valve body assembly and a stator unit that is mounted on the valve body assembly. The valve body assembly includes a valve body that includes a valve seat, a rotor that is rotatable with respect to the valve body, a valve member that faces the valve seat and moves toward the valve seat when the rotor rotates in a first direction, and a stopper mechanism that restricts rotation of the rotor in the first direction when the rotor is at a reference position. The stator unit includes a stator that is disposed coaxially with the rotor and constitutes a stepping motor together with the rotor. The electric valve includes mounting positions in which the stator unit is mounted on the valve body assembly, and the mounting positions are referred to as stator unit mounting positions. Where θ represents a step angle of the stepping motor, M represents a number of excitation patterns of the stepping motor, K represents a number of the stator unit mounting positions, and U represents any integer, an angle dα[j] (j = 1, 2, ..., K - 1) around an axis between a j-th stator unit mounting position of the stator unit mounting positions and a (j + 1)-th stator unit mounting position of the stator unit mounting positions is a multiple of the step angle θ, and the following expression (1) is satisfied. $dα \left[j\right] \neq M \times θ \times U$ (1)

In the present invention, preferably, an angle α[k] (k = 1, 2, ..., K) of a k-th stator unit mounting position of the stator unit mounting positions around the axis is represented by the following expression (2) $α \left[k\right] = \left(M\times N\pm 1\right) \times \left(k-1\right) \times θ$ (2) where N is an integer.

In the present invention, preferably, the valve body assembly includes receiving portions corresponding to the stator unit mounting positions. Preferably, the stator unit includes a mounting portion capable of being aligned with any one of the receiving portions. Preferably, the mounting portion is a projection and the receiving portions are recesses or holes, or the mounting portion is a recess or a hole and the receiving portions are projections. Preferably, the stator unit is mounted in one of the stator unit mounting positions corresponding to one of the receiving portions by the mounting portion being secured to the one of the receiving portions.

In the present invention, preferably, the electric valve includes a threaded member with an external thread. Preferably, the valve body assembly includes internal thread holes corresponding to the stator unit mounting positions. Preferably, the stator unit includes a through hole capable of being aligned with any one of the internal thread holes. Preferably, the stator unit is mounted in one of the stator unit mounting positions corresponding to one of the internal thread holes by the threaded member being disposed in the through hole and screwed into the one of the internal thread holes.

To achieve the object described above, an electric valve according to another aspect of the present invention includes a valve body, a rotor unit that is mounted on the valve body, and a stator unit that is mounted on the valve body. The rotor unit includes a valve seat member that includes a valve seat, a rotor that is rotatable with respect to the valve seat member, a valve member that faces the valve seat and moves toward the valve seat when the rotor rotates in a first direction, and a stopper mechanism that restricts rotation of the rotor in the first direction when the rotor is at a reference position. The stator unit includes a stator that is disposed coaxially with the rotor and constitutes a stepping motor together with the rotor. The electric valve includes a mounting position in which the stator unit is mounted on the valve body. The electric valve includes mounting positions in which the rotor unit is mounted on the valve body, and the mounting positions are referred to as rotor unit mounting positions. Where θ represents a step angle of the stepping motor, M represents a number of excitation patterns of the stepping motor, K represents a number of the rotor unit mounting positions, and U represents any integer, an angle dβ[j] (j = 1, 2, ..., K - 1) around an axis between a j-th rotor unit mounting position of the rotor unit mounting positions and a (j + 1)-th rotor unit mounting position of the rotor unit mounting positions is a multiple of the step angle θ, and the following expression (3) is satisfied. $dβ \left[j\right] \neq M \times θ \times U$ (3)

In the present invention, preferably, an angle β[k] (k = 1, 2, ..., K) of a k-th rotor unit mounting position of the rotor unit mounting positions around the axis is represented by the following expression (4) $β \left[k\right] = \left(M\times N\pm 1\right) \times \left(k-1\right) \times θ$ (4) where N represents an integer.

In the present invention, preferably, the valve body includes a mounting hole with an internal thread, and the internal thread is disposed on an inner circumferential surface of the mounting hole. Preferably, the rotor unit includes a mounting member with an external thread, the external thread is disposed on an outer circumferential surface of the mounting member and screwed into the internal thread, and the mounting member holds the valve seat member. Preferably, the mounting member is disposed coaxially with the rotor. Preferably, where K represents the number of the rotor unit mounting positions, up to K spacers are located between the valve body and the mounting member, and at least one spacer is located between the valve body and the mounting member. Preferably, the step angle is equal to a rotational angle of the mounting member around the axis corresponding to a thickness per spacer when the external thread is screwed into the internal thread.

In the present invention, preferably, the electric valve includes a threaded member with an external thread. Preferably, the valve body includes internal thread holes corresponding to the rotor unit mounting positions. Preferably, the rotor unit includes a through hole capable of being aligned with any one of the internal thread holes. Preferably, the rotor unit is mounted in one of the rotor unit mounting positions corresponding to one of the internal thread holes by the threaded member being disposed in the through hole and screwed into the one of the internal thread holes.

In the present invention, preferably, the electric valve includes a threaded member with an external thread. Preferably, the rotor unit includes through holes corresponding to the rotor unit mounting positions. Preferably, the valve body includes an internal thread hole capable of being aligned with any one of the through holes. Preferably, the rotor unit is mounted in one of the rotor unit mounting positions corresponding to one of the through holes by the threaded member being disposed in the one of the through holes and screwed into the internal thread hole. Advantageous Effects of Invention

According to the present invention, the electric valve includes the valve body assembly and the stator unit that is mounted on the valve body assembly. The electric valve includes the mounting positions in which the stator unit is mounted on the valve body assembly, and the mounting positions are referred to as "stator unit mounting positions". Where θ represents the step angle of the stepping motor, M represents the number of excitation patterns of the stepping motor, K represents the number of the stator unit mounting positions, and U represents any integer, the angle dα[j] (j = 1, 2, ..., K - 1) around the axis between the j-th stator unit mounting position and the (j + 1)-th stator unit mounting position is the multiple of the step angle θ, and the expression (1) is satisfied.

With this configuration, an angle dα between one stator unit mounting position and another stator unit mounting position next to the one stator unit mounting position around the axis can be prevented from being a multiple of a number that is the number M of the excitation patterns multiplied by the step angle θ. Therefore, the stator unit is mounted on the valve body assembly in another stator unit mounting position instead of the one stator unit mounting position, thereby enabling the position of the rotor when the pulse corresponding to the specific excitation pattern is input to the stepping motor to be changed by a multiple of the step angle θ. The step angle θ corresponds to one pulse to be input to the stepping motor. As a result, in the electric valve, when the number of pulses (valve opening pulse number) required for the rotor to rotate from the reference position to the valve opening position is greater or less than a reference number of the valve opening pulse number, the stator unit is mounted in another stator unit mounting position instead of the one stator unit mounting position. This enables the valve opening pulse number to be adjusted. Accordingly, it is possible to decrease a variation in the valve opening pulse number among electric valves.

Alternatively, according to the present invention, the electric valve includes the valve body, the rotor unit that is mounted on the valve body, and the stator unit that is mounted on the valve body. The electric valve includes the mounting position in which the stator unit is mounted on the valve body. The electric valve includes the multiple mounting positions in which the rotor unit is mounted on the valve body, and the mounting positions are referred to as "rotor unit mounting positions". Where θ represents the step angle of the stepping motor, M represents the number of excitation patterns of the stepping motor, K represents the number of the rotor unit mounting positions, and U represents any integer, the angle dβ[j] (j = 1, 2, ..., K - 1) around the axis between the j-th rotor unit mounting position and the (j + 1)-th rotor unit mounting position is the multiple of the step angle θ, and is represented by the expression (3).

With this configuration, an angle dβ between one rotor unit mounting position and another rotor unit mounting position next to the one rotor unit mounting position around the axis can be prevented from being a multiple of a number that is the number M of excitation patterns multiplied by the step angle θ. Therefore, the rotor unit is mounted on the valve body in another rotor unit mounting position instead of the one rotor unit mounting position, thereby enabling the position of the rotor when the pulse corresponding to the specific excitation pattern is input to the stepping motor to be changed by a multiple of the step angle θ. The step angle θ corresponds to one pulse to be input to the stepping motor. As a result, in the electric valve, when the number of pulses (valve opening pulse number) required for the rotor to rotate from the reference position to the valve opening position is greater or less than the reference number of the valve opening pulse number, the rotor unit is mounted in another rotor unit mounting position instead of the one rotor unit mounting position. This enables the valve opening pulse number to be adjusted. Accordingly, it is possible to decrease a variation in the valve opening pulse number among electric valves.

### Brief Description of Drawings

[Fig. 1] Fig. 1 is a sectional view of an electric valve according to a first embodiment of the present invention.
[Fig. 2] Fig. 2 is an enlarged sectional view of a part of the electric valve in Fig. 1.
[Fig. 3] Fig. 3 is a sectional view of a valve body assembly of the electric valve in Fig. 1.
[Fig. 4] Fig. 4 is a diagram of the valve body assembly in Fig. 3.
[Fig. 5] Fig. 5 is a diagram of a valve stem holder of the valve body assembly in Fig. 3.
[Fig. 6] Fig. 6 is a side view of a guide bush of the valve body assembly in Fig. 3.
[Fig. 7] Fig. 7 is a diagram of a stopper member of the valve body assembly in Fig. 3.
[Fig. 8] Fig. 8 is a plan view of the valve stem holder, the stopper member, a rotor, and a stator of the electric valve in Fig. 1.
[Fig. 9] Fig. 9 is a diagram illustrating a stepping motor of the electric valve in Fig. 1.
[Fig. 10] Fig. 10 is a diagram schematically illustrating the positional relationship between magnetic poles of the rotor and pole teeth of the stator (a configuration in which a valve opening pulse number is a reference number).
[Fig. 11] Fig. 11 is a diagram schematically illustrating the positional relationship between the magnetic poles of the rotor and the pole teeth of the stator (a state in which pulse P1 is input).
[Fig. 12] Fig. 12 is a diagram schematically illustrating the positional relationship between the magnetic poles of the rotor and the pole teeth of the stator (a state in which pulse P2 is input).
[Fig. 13] Fig. 13 is a diagram schematically illustrating the positional relationship between the magnetic poles of the rotor and the pole teeth of the stator (a state in which pulse P3 is input).
[Fig. 14] Fig. 14 is a diagram schematically illustrating the positional relationship between the magnetic poles of the rotor and the pole teeth of the stator (a configuration in which the valve opening pulse number is more than the reference number by 1).
[Fig. 15] Fig. 15 is a diagram schematically illustrating the positional relationship between the magnetic poles of the rotor and the pole teeth of the stator (a state in which pulse P1 is input).
[Fig. 16] Fig. 16 is a diagram schematically illustrating the positional relationship between the magnetic poles of the rotor and the pole teeth of the stator (a state in which pulse P2 is input).
[Fig. 17] Fig. 17 is a diagram schematically illustrating the positional relationship between the magnetic poles of the rotor and the pole teeth of the stator (a state in which pulse P3 is input).
[Fig. 18] Fig. 18 is a diagram schematically illustrating the positional relationship between the magnetic poles of the rotor and the pole teeth of the stator (a configuration in which the valve opening pulse number is less than the reference number by 1).
[Fig. 19] Fig. 19 is a diagram schematically illustrating the positional relationship between the magnetic poles of the rotor and the pole teeth of the stator (a state in which pulse P1 is input).
[Fig. 20] Fig. 20 is a diagram schematically illustrating the positional relationship between the magnetic poles of the rotor and the pole teeth of the stator (a state in which pulse P2 is input).
[Fig. 21] Fig. 21 is a diagram schematically illustrating the positional relationship between the magnetic poles of the rotor and the pole teeth of the stator (a state in which pulse P3 is input).
[Fig. 22] Fig. 22 is a sectional view of a first modification of the valve body assembly in Fig. 3.
[Fig. 23] Fig. 23 is a plan view of the valve body assembly in Fig. 22.
[Fig. 24] Fig. 24 is a sectional view of a second modification of the valve body assembly in Fig. 3.
[Fig. 25] Fig. 25 is a plan view of the valve body assembly in Fig. 24.
[Fig. 26] Fig. 26 is a sectional view of an electric valve according to a second embodiment of the present invention.
[Fig. 27] Fig. 27 is an enlarged sectional view of a part of the electric valve in Fig. 26.
[Fig. 28] Fig. 28 is a plan view of a valve body assembly of the electric valve in Fig. 26.
[Fig. 29] Fig. 29 is a sectional view of a first modification of the valve body assembly in Fig. 28.
[Fig. 30] Fig. 30 is a sectional view of a second modification of the valve body assembly in Fig. 28.
[Fig. 31] Fig. 31 is a sectional view of an electric valve according to a third embodiment of the present invention.
[Fig. 32] Fig. 32 is a plan view of a valve body of the electric valve in Fig. 31.
[Fig. 33] Fig. 33 is a sectional view of a rotor unit of the electric valve in Fig. 31.
[Fig. 34] Fig. 34 is a sectional view of an electric valve according to a fourth embodiment of the present invention.
[Fig. 35] Fig. 35 is a front view of the electric valve in Fig. 34.
[Fig. 36] Fig. 36 is a plan view of the electric valve in Fig. 34.
[Fig. 37] Fig. 37 is a sectional view of an electric valve according to a fifth embodiment of the present invention.
[Fig. 38] Fig. 38 is a plan view of a valve body of the electric valve in Fig. 37.
[Fig. 39] Fig. 39 is a sectional view of a rotor unit of the electric valve in Fig. 37.
[Fig. 40] Fig. 40 is a plan view of the rotor unit in Fig. 39.
[Fig. 41] Fig. 41 is a plan view of the electric valve in Fig. 37.

### Description of Embodiments

### (First Embodiment)

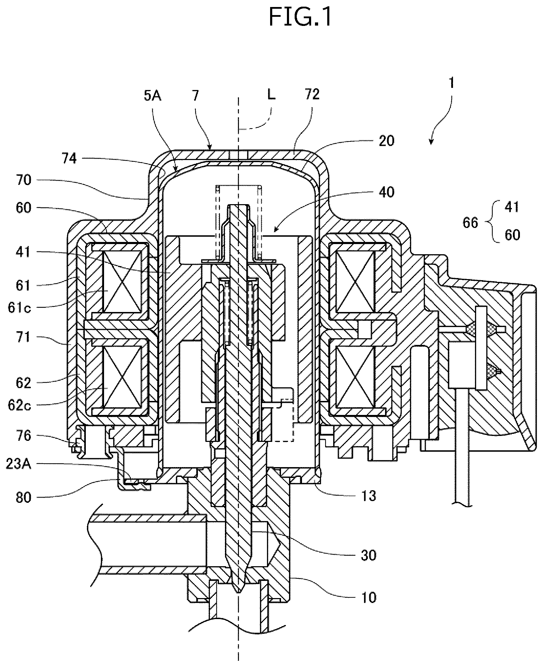

An electric valve according to a first embodiment of the present invention is described below with reference to Fig. 1 to Fig. 21. The electric valve according to the present embodiment is used as, for example, a flow control valve for controlling the flow rate of refrigerant in a refrigeration cycle system of an air conditioner.

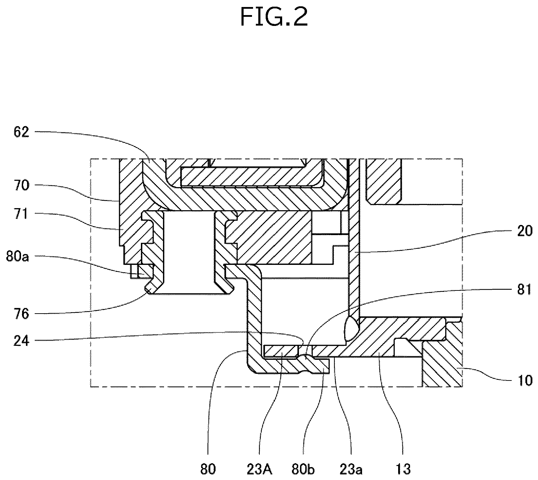

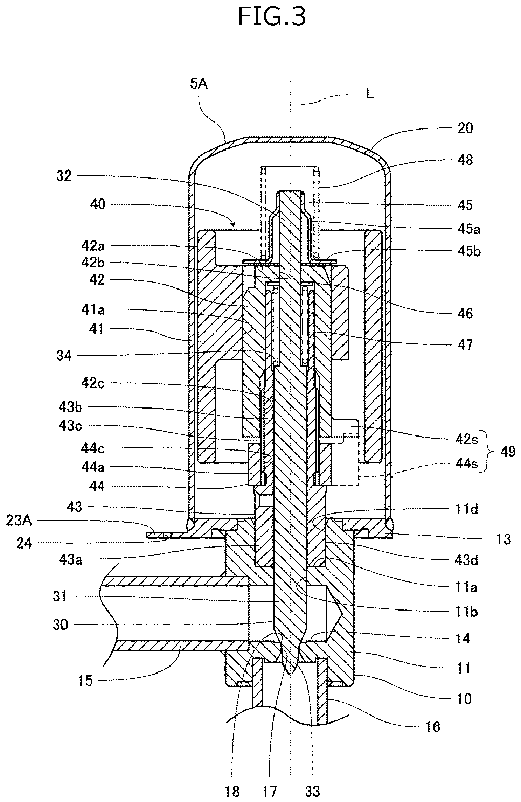

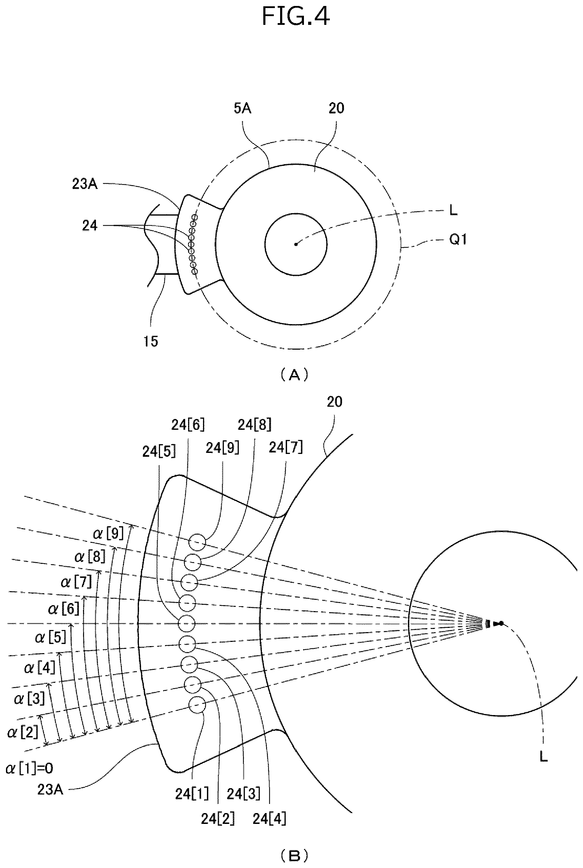

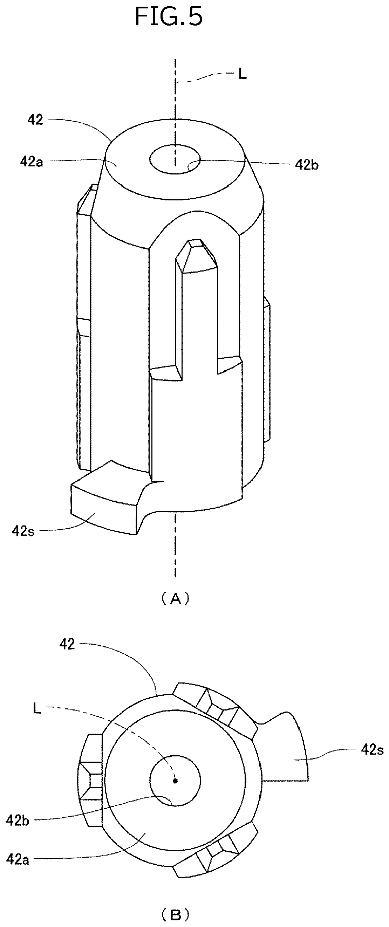

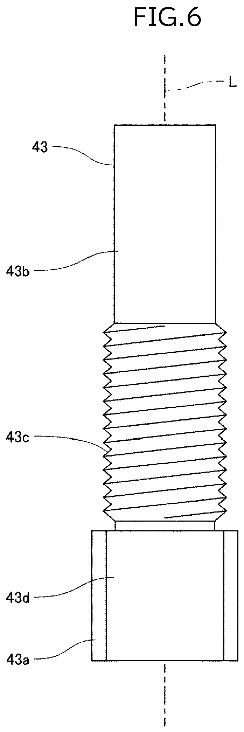

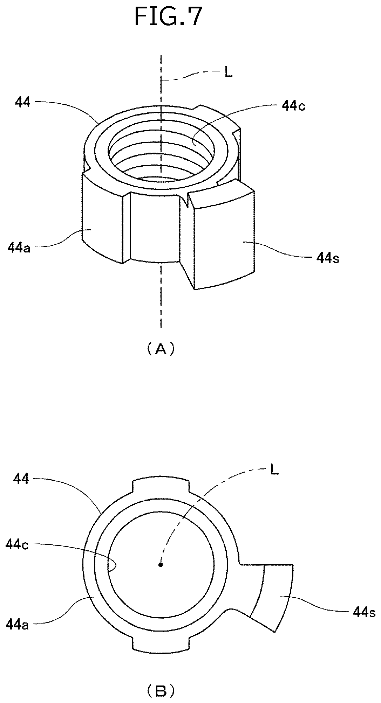

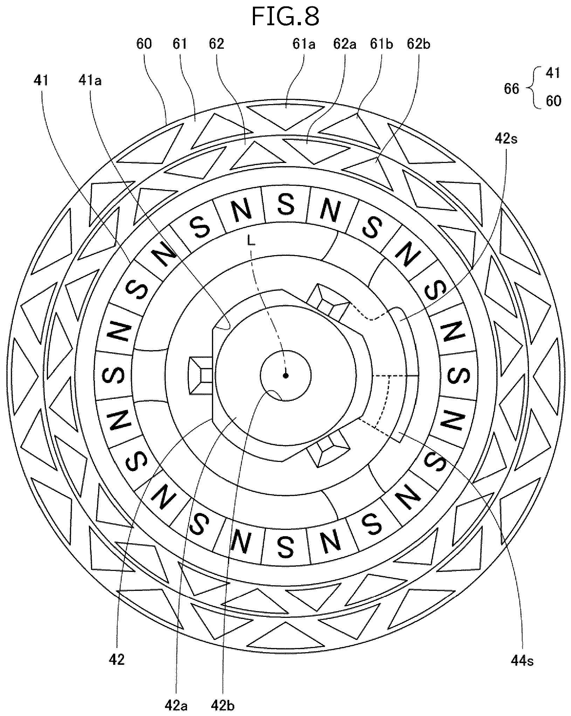

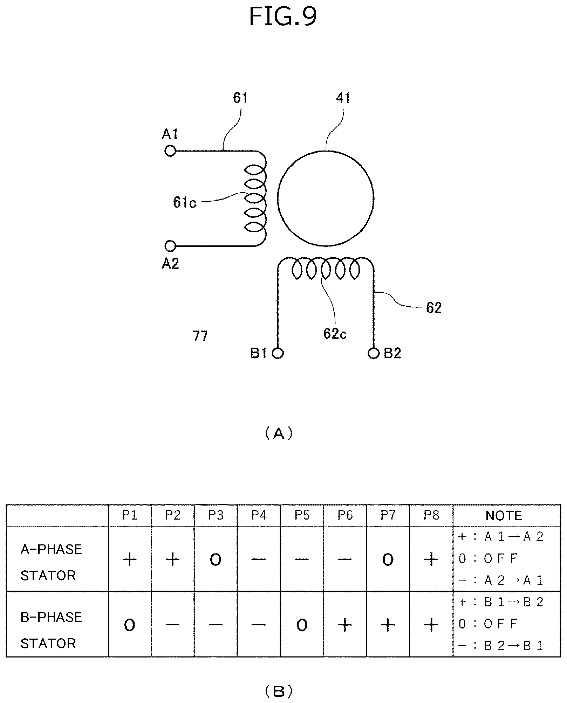

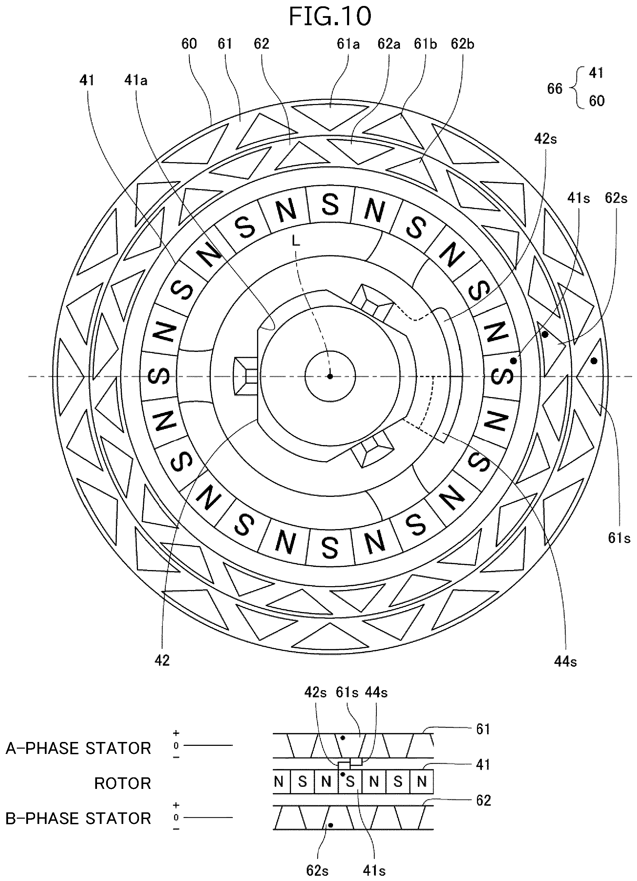

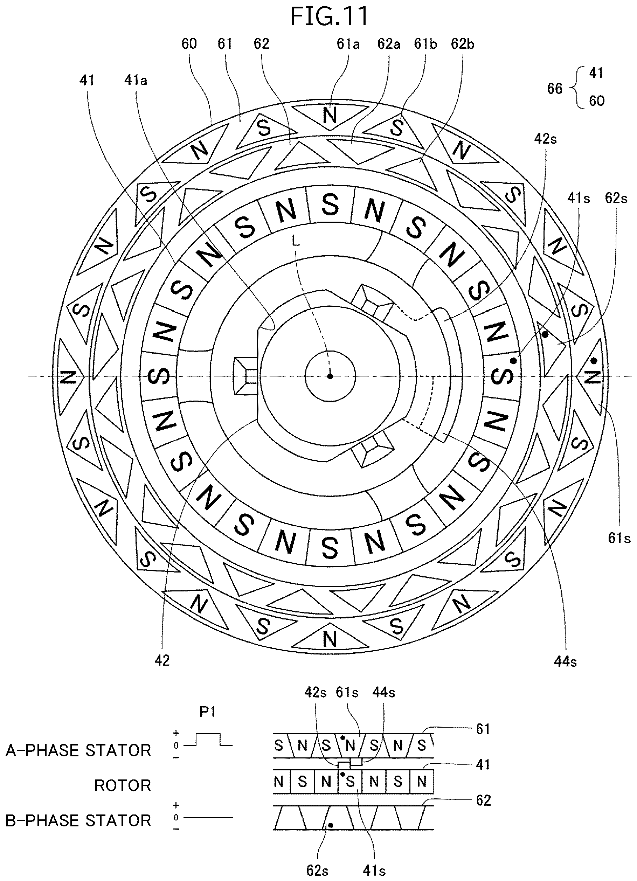

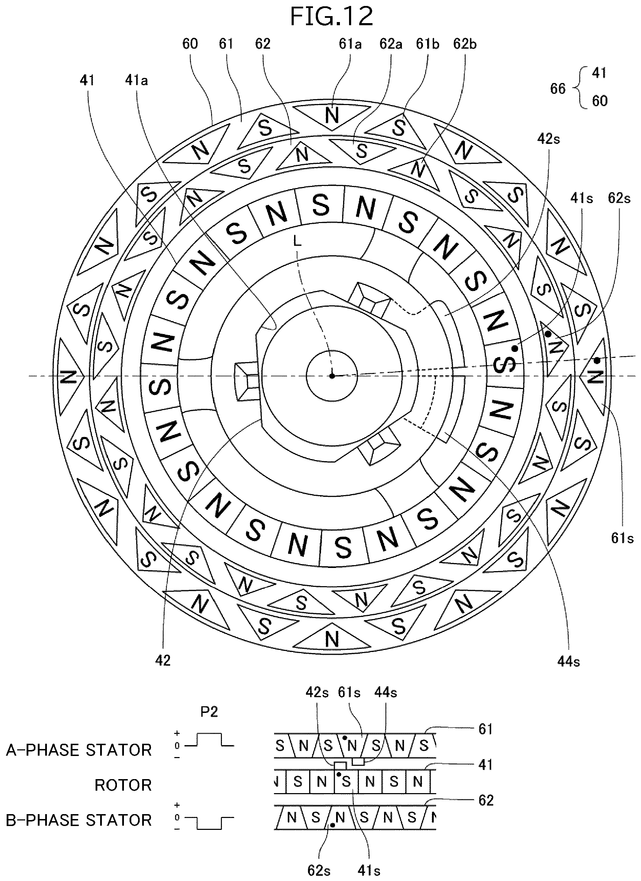

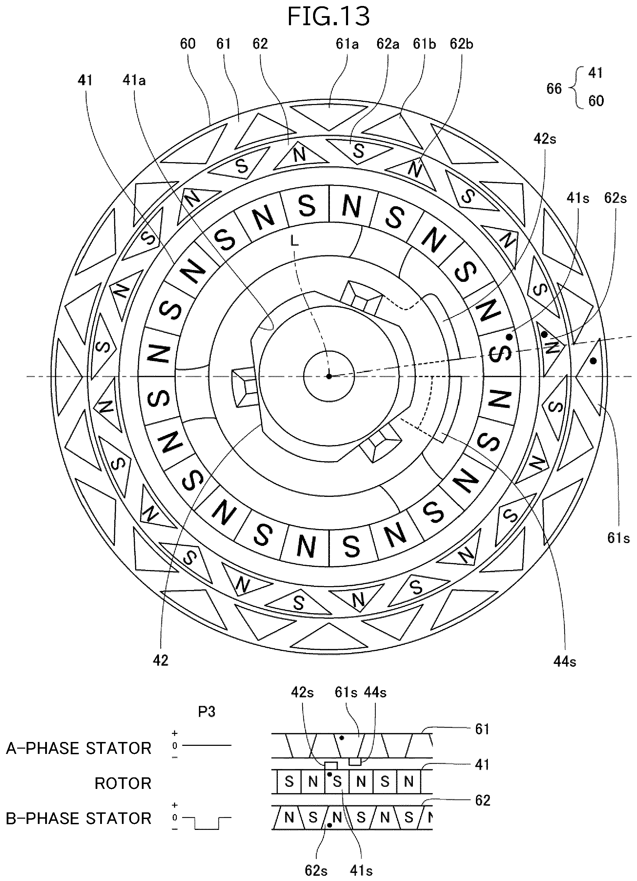

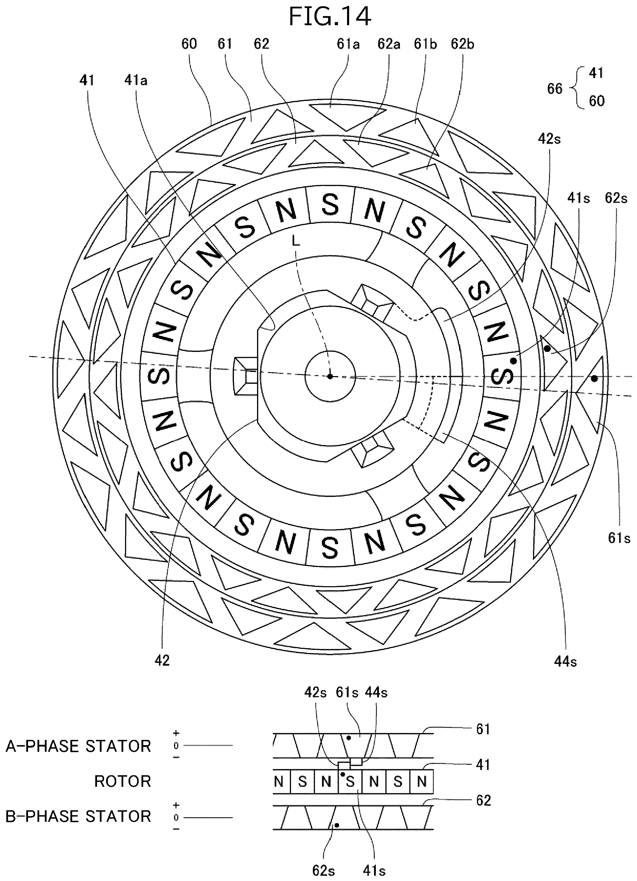

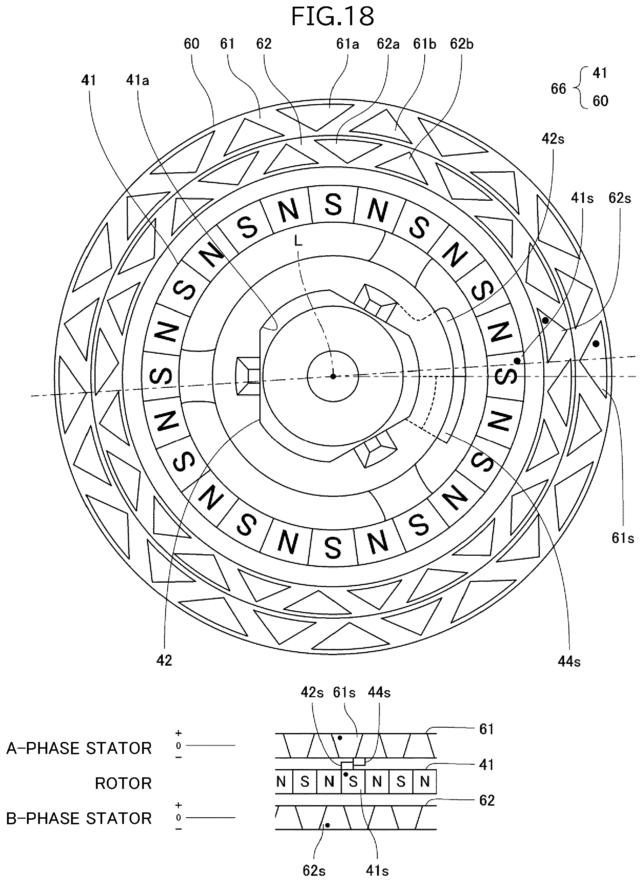

Fig. 1 is a sectional view of the electric valve according to the first embodiment of the present invention. Fig. 2 is an enlarged sectional view of a part (mainly a mounting plate and a mounting tab) of the electric valve in Fig. 1. Fig. 3 is a sectional view of a valve body assembly of the electric valve in Fig. 1. Fig. 4 is a diagram of the valve body assembly in Fig. 3. Fig. 4A is a plan view of the valve body assembly. Fig. 4B is an enlarged plan view of a part (mainly the mounting plate) of the valve body assembly. Fig. 5 is a diagram of a valve stem holder of the valve body assembly in Fig. 3. Fig. 5A is a perspective view of the valve stem holder. Fig. 5B is a plan view of the valve stem holder. Fig. 6 is a side view of a guide bush of the valve body assembly in Fig. 3. Fig. 7 is a diagram of a stopper member of the valve body assembly in Fig. 3. Fig. 7A is a perspective view of the stopper member, and Fig. 7B is a plan view of the stopper member. Fig. 8 is a plan view of the valve stem holder, the stopper member, a rotor, and a stator of the electric valve in Fig. 1. Fig. 8 schematically illustrates the stator. Fig. 8 schematically illustrates magnetic poles of the rotor. Fig. 9 is a diagram illustrating a stepping motor of the electric valve in Fig. 1. Fig. 9A schematically illustrates the rotor and coils of the stator. Fig. 9B illustrates an example of the correspondence between pulses and drive currents to be supplied to the stator. Fig. 10 to Fig. 21 are diagrams schematically illustrating the positional relationships between the magnetic poles of the rotor and pole teeth of the stator. Fig. 10 to Fig. 13 illustrate a configuration in which a valve opening pulse number is a reference number. Fig. 14 to Fig. 17 illustrate a configuration in which the valve opening pulse number is more than the reference number by 1. Fig. 18 to Fig. 21 illustrate a configuration in which the valve opening pulse number is less than the reference number by 1. Fig. 11, Fig. 15, and Fig. 19 illustrate states in which pulse P1 is input to the stepping motor. Fig. 12, Fig. 16, and Fig. 20 illustrate states in which pulse P2 is input to the stepping motor. Fig. 13, Fig. 17, and Fig. 21 illustrate states in which pulse P3 is input to the stepping motor. Fig. 10 to Fig. 21 schematically illustrate the stator. Fig. 10 to Fig. 21 schematically illustrate the magnetic poles of the rotor.

As illustrated in Fig. 1, an electric valve 1 according to the first embodiment includes a valve body assembly 5A and a stator unit 7.

As illustrated in Fig. 3, the valve body assembly 5A includes a valve body 10, a can 20, a mounting plate 23A, a valve member 30, and a driving section 40.

The valve body 10 includes a body member 11 and a connection member 13. The body member 11 has a circular columnar shape. The body member 11 includes a valve chamber 14. A first conduit 15 and a second conduit 16 are bonded to the body member 11. The first conduit 15 is disposed in a direction (lateral direction in Fig. 3) perpendicular to an axis L and is connected to the valve chamber 14. The second conduit 16 is disposed in a direction of the axis L (up-and-down direction in Fig. 3) and is connected to the valve chamber 14 via a valve port 17. The valve port 17 is enclosed by a valve seat 18, which has a circular annular shape, in the valve chamber 14. The body member 11 includes a fitting hole 11a in a circular shape. The fitting hole 11a is in the upper end surface of the body member 11. The inner circumferential surface of the fitting hole 11a has a planar surface 11d facing leftward in Fig. 3. A stem hole 11b is provided at the bottom of the fitting hole 11a and communicates with the valve chamber 14. The connection member 13 has a circular annular plate-like shape. The inner circumferential edge of the connection member 13 is bonded to the upper end portion of the body member 11. The body member 11 and the connection member 13 are made of a metal, such as an aluminum alloy, stainless steel, or brass.

The can 20 is made of a metal, such as stainless steel. The can 20 has a circular cylindrical shape. The can 20 is open at the lower end portion and is closed at the upper end portion. The lower end portion of the can 20 is bonded to the outer peripheral edge of the connection member 13.

As illustrated in Fig. 4, the mounting plate 23A has a circular arc shape. The central angle of the circular arc shape of the mounting plate 23A is approximately 50 degrees. The inner edge of the mounting plate 23A is integrally connected to the outer peripheral edge of the connection member 13. The connection member 13 and the mounting plate 23A constitute a single component. The axis L passes through the center of the circular arc shape of the mounting plate 23A and the center of the connection member 13. The mounting plate 23A protrudes radially outward from the connection member 13. The mounting plate 23A has multiple holes 24. The holes 24 have a circular shape and extend through the mounting plate 23A. Each of the holes 24 is a receiving portion. In the present embodiment, the mounting plate 23A has 9 holes 24 (holes 24[1] to 24[9]). The holes 24[1] to 24[9] are on a circle Q1. The axis L passes through the center of the circle Q1.

The valve member 30 includes a first stem portion 31, a second stem portion 32, and a valve portion 33. The first stem portion 31 has a circular columnar shape. The second stem portion 32 has a circular columnar shape. The diameter of the second stem portion 32 is smaller than the diameter of the first stem portion 31. The second stem portion 32 is provided coaxially and continuously with the upper end portion of the first stem portion 31. The valve member 30 has a step portion 34. The step portion 34 is a circular annular plane facing upward. The step portion 34 is disposed in the part in which the second stem portion 32 and the first stem portion 31 are continuous with each other. The valve portion 33 has a conical shape with a diameter decreasing from top to bottom. The valve portion 33 is provided coaxially and continuously with the lower end portion of the first stem portion 31. The valve portion 33 is disposed in the valve port 17. A variable throttle is formed between the valve portion 33 and the valve port 17. The valve portion 33 faces the valve seat 18. The valve port 17 is closed when the valve portion 33 is in contact with the valve seat 18.

The driving section 40 moves the valve member 30 in the direction of the axis L. The movement of the valve member 30 opens and closes the valve port 17. The driving section 40 includes a rotor 41, a valve stem holder 42, a guide bush 43, a stopper member 44, and a fixed member 45.

The rotor 41 has a circular cylindrical shape. The outer diameter of the rotor 41 is slightly smaller than the inner diameter of the can 20. The rotor 41 is disposed inside the can 20. The rotor 41 is rotatable with respect to the valve body 10. The rotor 41 has a plurality of north (N) poles and a plurality of south (S) poles. The N poles and the S poles are disposed on the outer circumferential surface of the rotor 41. The N poles and the S poles extend in the direction of the axis L. The N poles and the S poles are alternately arranged at regular angular intervals in the circumferential direction. In the present embodiment, the rotor 41 includes 12 N poles and 12 S poles. The angle between adjacent N and S poles is 15 degrees.

Fig. 5 illustrates the valve stem holder 42. The valve stem holder 42 has a circular cylindrical shape. The valve stem holder 42 is open at the lower end portion and is closed at the upper end portion. The valve stem holder 42 is fitted into a fitting hole 41a of the rotor 41. The valve stem holder 42 rotates together with the rotor 41. A movable stopper 42s is disposed at the lower end portion on the outer circumferential surface of the valve stem holder 42. The movable stopper 42s is a protrusion extending radially outward from the outer circumferential surface of the valve stem holder 42. The valve stem holder 42 has a stem hole 42b. The stem hole 42b is in an upper wall portion 42a of the valve stem holder 42. The second stem portion 32 of the valve member 30 is disposed in the stem hole 42b movably in the direction of the axis L. A washer 46 is disposed on the lower surface of the upper wall portion 42a of the valve stem holder 42. A valve closing spring 47 is disposed between the step portion 34 of the valve member 30 and the washer 46. The valve closing spring 47 is a coil spring and pushes the valve member 30 toward the valve seat 18. The inner circumferential surface of the valve stem holder 42 has an internal thread 42c. The movable stopper 42s is fixed with respect to the rotor 41.

Fig. 6 illustrates the guide bush 43. The guide bush 43 includes a base portion 43a and a support portion 43b. The base portion 43a has a circular cylindrical shape. The support portion 43b has a circular cylindrical shape. The outer circumferential surface of the base portion 43a has a planar surface 43d. The base portion 43a is press-fitted into the fitting hole 11a of the body member 11, and the planar surface 43d is in contact with the planar surface 11d of the fitting hole 11a. Consequently, the central axis of the body member 11 and the central axis of the guide bush 43 are aligned with the axis L, and the guide bush 43 is correctly positioned with respect to the body member 11 around the axis L. The outer diameter of the support portion 43b is smaller than the outer diameter of the base portion 43a. The inner diameter of the support portion 43b is equal to the inner diameter of the base portion 43a. The support portion 43b is provided coaxially and continuously with the upper end portion of the base portion 43a. The outer circumferential surface of the support portion 43b has an external thread 43c. The external thread 43c is screwed into the internal thread 42c of the valve stem holder 42. The first stem portion 31 of the valve member 30 is disposed inside the guide bush 43. The guide bush 43 supports the valve member 30 movably in the direction of the axis L.

Fig. 7 illustrates the stopper member 44. The stopper member 44 includes a stopper body 44a. The stopper body 44a has a circular cylindrical shape. The inner circumferential surface of the stopper body 44a has an internal thread 44c. A fixed stopper 44s is disposed on the outer circumferential surface of the stopper body 44a. The fixed stopper 44s is a protrusion extending radially outward from the outer circumferential surface of the stopper body 44a. The external thread 43c is screwed into the internal thread 44c until the stopper body 44a comes into contact with the base portion 43a of the guide bush 43. This enables the stopper member 44 to be fixed to the guide bush 43. The fixed stopper 44s is fixed with respect to the valve body 10.

The fixed member 45 includes a fixed portion 45a and a flange portion 45b. The fixed portion 45a has a stepped circular cylindrical shape. The second stem portion 32 of the valve member 30 is disposed inside the fixed portion 45a. The fixed portion 45a is bonded to the second stem portion 32. The flange portion 45b is provided continuously with the lower end portion of the fixed portion 45a. A return spring 48 is disposed such that the return spring 48 encloses the fixed member 45. The return spring 48 is a coil spring.

The stator unit 7 includes a stator 60, a housing 70, and a mounting tab 80.

The stator 60 has a circular cylindrical shape. The stator 60 includes an A-phase stator 61 and a B-phase stator 62.

The A-phase stator 61 includes a plurality of claw-pole type pole teeth 61a and 61b in the inner circumference. The tip ends of the pole teeth 61a point down, and the tip ends of the pole teeth 61b point up. The pole teeth 61a and the pole teeth 61b are alternately arranged at regular angular intervals in the circumferential direction. In the present embodiment, the A-phase stator 61 includes 12 pole teeth 61a and 12 pole teeth 61b. The angle between adjacent pole teeth 61a and 61b is 15 degrees. When a coil 61c of the A-phase stator 61 is energized, the pole teeth 61a and the pole teeth 61b have mutually opposite polarities.

The B-phase stator 62 includes a plurality of claw-pole type pole teeth 62a and 62b in the inner circumference. The tip ends of the pole teeth 62a point down, and the tip ends of the pole teeth 62b point up. The pole teeth 62a and the pole teeth 62b are alternately arranged at regular angular intervals in the circumferential direction. In the present embodiment, the B-phase stator 62 includes 12 pole teeth 62a and 12 pole teeth 62b. The angle between adjacent pole teeth 62a and 62b is 15 degrees. When a coil 62c of the B-phase stator 62 is energized, the pole teeth 62a and the pole teeth 62b have mutually opposite polarities.

The A-phase stator 61 is coaxially disposed on the B-phase stator 62. When viewed in the direction of the axis L, the angle between each of the pole teeth 61a of the A-phase stator 61 and a corresponding adjacent one of the pole teeth 62a of the B-phase stator 62 is 7.5 degrees. In other words, the B-phase stator 62 is at a position rotated around the axis L by 7.5 degrees with respect to the A-phase stator 61 from a position where the pole teeth 61a are aligned with the pole teeth 62a in the direction of the axis L. As illustrated in Fig. 9A, the coil 61c of the A-phase stator 61 includes terminals A1 and A2. The coil 62c of the B-phase stator 62 includes terminals B1 and B2. The terminals A1 and A2 and the terminals B1 and B2 are electrically connected to a motor driver (not illustrated).

The can 20 is disposed inside the stator 60. The rotor 41 is disposed inside the can 20. The stator 60 and the rotor 41 are members of a stepping motor 66. In the present embodiment, the excitation mode of the stepping motor 66 is 1-2 phase excitation. The step angle θ of the stepping motor 66 is 3.75 degrees. The step angle θ is a rotational angle per pulse in the stepping motor 66.

The rotor 41 is rotated by pulses P (P1 to P8) input to the stepping motor 66. Specifically, the rotor 41 is rotated by drive currents, corresponding to pulses P, supplied to the stator 60 of the stepping motor 66. In this specification, the expression "pulses P are input to the stepping motor 66" is synonymous with "drive currents corresponding to pulses P are supplied to the stator 60 of the stepping motor 66". Fig. 9B illustrates an example of the correspondence between pulses P1 to P8 and states of drive currents to be supplied to the stator 60 (hereinafter referred to as "excitation patterns"). In Fig. 9B, (+) indicates supply of the drive current flowing from the terminal A1 to the terminal A2 or supply of the drive current flowing from the terminal B1 to the terminal B2, (-) indicates supply of the drive current flowing from the terminal A2 to the terminal A1 or supply of the drive current flowing from the terminal B2 to the terminal B1, and (0) indicates that no drive current is supplied. In the present embodiment, the number M of excitation patterns is 8. Pulses P1 to P8 illustrated in Fig. 9B are input to the stepping motor 66 in order.

In response to pulse P1 being input, the drive current flowing from the terminal A1 to the terminal A2 is supplied to the coil 61c (+), and no drive current is supplied to the coil 62c (0).

In response to pulse P2 being input, the drive current flowing from the terminal A1 to the terminal A2 is supplied to the coil 61c (+), and the drive current flowing from the terminal B2 to the terminal B1 is supplied to the coil 62c (-).

In response to pulse P3 being input, no drive current is supplied to the coil 61c (0), and the drive current flowing from the terminal B2 to the terminal B1 is supplied to the coil 62c (-).

In response to pulse P4 being input, the drive current flowing from the terminal A2 to the terminal A1 is supplied to the coil 61c (-), and the drive current flowing from the terminal B2 to the terminal B1 is supplied to the coil 62c (-).

In response to pulse P5 being input, the drive current flowing from the terminal A2 to the terminal A1 is supplied to the coil 61c (-), and no drive current is supplied to the coil 62c (0).

In response to pulse P6 being input, the drive current flowing from the terminal A2 to the terminal A1 is supplied to the coil 61c (-), and the drive current flowing from the terminal B1 to the terminal B2 is supplied to the coil 62c (+).

In response to pulse P7 being input, no drive current is supplied to the coil 61c (0), and the drive current flowing from the terminal B1 to the terminal B2 is supplied to the coil 62c (+).

In response to pulse P8 being input, the drive current flowing from the terminal A1 to the terminal A2 is supplied to the coil 61c (+), and the drive current flowing from the terminal B1 to the terminal B2 is supplied to the coil 62c (+).

In rotating the rotor 41 in a first direction (clockwise in Fig. 8), pulses P are cyclically input to the stepping motor 66 in descending order (in the order from pulse P8 to pulse P1). When the rotor 41 rotates in the first direction, a screw-feed action between the internal thread 42c of the valve stem holder 42 and the external thread 43c of the guide bush 43 moves the rotor 41 and the valve stem holder 42 downward. The rotor 41 (the valve stem holder 42) pushes the valve member 30 downward via the valve closing spring 47. The valve member 30 moves downward, and the valve portion 33 comes into contact with the valve seat 18. At this time, the rotor 41 is at a valve closing position Rc. When the rotor 41 at this position further rotates in the first direction, the valve closing spring 47 is compressed and the rotor 41 and the valve stem holder 42 further move downward. The valve member 30 does not move downward. When the movable stopper 42s of the valve stem holder 42 comes into contact with the fixed stopper 44s of the stopper member 44, the rotation of the rotor 41 in the first direction is restricted. At this time, the rotor 41 is at a reference position Rx. The movable stopper 42s and the fixed stopper 44s constitute a stopper mechanism 49 that restricts the rotation of the rotor 41 in the first direction.

In rotating the rotor 41 in a second direction (counterclockwise in Fig. 8) opposite to the first direction, pulses P are cyclically input to the stepping motor 66 in ascending order (in the order from pulse P1 to pulse P8). When the rotor 41 rotates in the second direction, the screw-feed action between the internal thread 42c of the valve stem holder 42 and the external thread 43c of the guide bush 43 moves the rotor 41 and the valve stem holder 42 upward. The rotor 41 (the valve stem holder 42) pushes the fixed member 45 upward. The valve member 30 moves upward together with the fixed member 45 and separates from the valve seat 18. The rotor 41 is considered to be at a valve opening position Ro when a fluid flow rate at the valve port 17 (opening degree of the valve port 17) reaches a predetermined value in a predetermined flow-rate measuring environment. The predetermined value is set as appropriate according to the configuration and application of the electric valve 1.

The housing 70 is made of synthetic resin. The housing 70 is injection molded. The housing 70 houses the stator 60. The housing 70 includes a peripheral wall portion 71 and an upper wall portion 72.

The peripheral wall portion 71 has a circular cylindrical shape. The stator 60 is embedded in the peripheral wall portion 71. The upper wall portion 72 is provided continuously with the upper end portion of the peripheral wall portion 71. The inner circumferential surface of the peripheral wall portion 71, the inner surface of the upper wall portion 72, and the inner circumferential surface of the stator 60 form an inner space 74 of the stator unit 7. The can 20 is disposed inside the inner space 74.

The mounting tab 80 is a rectangular metal plate bent into a crank shape. A first end portion 80a of the mounting tab 80 is caulked to a conductive member 76 embedded in the lower end portion of the peripheral wall portion 71. The mounting tab 80 may be welded to the conductive member 76. The conductive member 76 is electrically connected to a yoke of the B-phase stator 62. The mounting tab 80 has a projecting portion 81. The projecting portion 81 is disposed at a second end portion 80b of the mounting tab 80. The projecting portion 81 projects upward. The projecting portion 81 is pressed to a lower surface 23a of the mounting plate 23A. The projecting portion 81 is a mounting portion.

The projecting portion 81 can be aligned with any one of the holes 24[1] to 24[9] of the mounting plate 23A. Specifically, when the stator unit 7 is rotated around the axis L clockwise in plan view, the tip end of the projecting portion 81 fits into the holes 24[1] to 24[9] in order. When the tip end of the projecting portion 81 fits into one of the holes 24[1] to 24[9], the projecting portion 81 is secured to the one of the holes 24, and the stator unit 7 is positioned with respect to the valve body assembly 5A. The electric valve 1 includes multiple mounting positions in which the stator unit 7 is mounted on the valve body assembly 5A, and the mounting positions are referred to as "stator unit mounting positions". The stator unit mounting positions correspond to the holes 24[1] to 24[9]. The stator unit 7 can be mounted in any one of the stator unit mounting positions.

In the present embodiment,
1: when the angle α[1] of the hole 24[1] around the axis L is 0 degrees,
2: the angle α[2] of the hole 24[2] around the axis L is 3.75 degrees in the first direction,
3: the angle α[3] of the hole 24[3] around the axis L is 7.5 degrees in the first direction,
4: the angle α[4] of the hole 24[4] around the axis L is 11.25 degrees in the first direction,
5: the angle α[5] of the hole 24[5] around the axis L is 15 degrees in the first direction,
6: the angle α[6] of the hole 24[6] around the axis L is 18.75 degrees in the first direction,
7: the angle α[7] of the hole 24[7] around the axis L is 22.5 degrees in the first direction,
8: the angle α[8] of the hole 24[8] around the axis L is 26.25 degrees in the first direction, and
9: the angle α[9] of the hole 24[9] around the axis L is 30 degrees in the first direction.
The angles of the holes 24[1] to 24[9] around the axis L increase by 3.75 degrees in the first direction.

In the holes 24[1] to 24[9], an angle dα[j] (j = 1 to 8) around the axis L between a j-th hole 24[j] and a (j + 1)-th hole 24[j + 1] is 3.75 degrees. An angle around the axis L between the stator unit 7 with the projecting portion 81 aligned with the hole 24[j] and the stator unit 7 with the projecting portion 81 aligned with the hole 24[j + 1] is the angle dα[j].

In the present embodiment, the angle dα[j] around the axis L between any two holes 24 adjacent to each other is 3.75 degrees. It is sufficient that the angle dα[j] be a multiple of the step angle θ and satisfy the following expression (1). Respective angles dα[j] may be different from each other. M is the number of excitation patterns. U is any integer. $dα \left[j\right] \neq M \times θ \times U$ (1)

The angle α[k] (k = 1 to 9) of a k-th hole 24[k] around the axis L is represented by the following expression (2A). The step angle θ of the stepping motor 66 is 3.75 degrees, the number of the excitation patterns M is 8, and the integer N is 0. $α \left[k\right] = \left(M\times N+1\right) \times \left(k-1\right) \times θ = \left(k-1\right) \times 3.75$ (2A)

In the electric valve 1, the respective central axes of the valve body 10 (the body member 11, the connection member 13), the valve port 17, the can 20, the valve member 30, the rotor 41, the valve stem holder 42, the guide bush 43, and the stator 60 (the A-phase stator 61, the B-phase stator 62) are aligned with the axis L. The center of the circular arc shape of the mounting plate 23A is also aligned with the axis L.

Next, an example of an initialization operation of the electric valve 1 and an example of an adjustment process of the stator unit mounting positions are described.

The electric valve 1 is controlled by an electric valve control device (not illustrated). The electric valve control device inputs, in the initialization operation of the electric valve 1, pulses P1 to P8 to the stepping motor 66 in descending order to rotate the rotor in the first direction and positions the rotor 41 at the reference position Rx. Then, the electric valve control device inputs pulses P1 to P8 to the stepping motor 66 in ascending order to rotate the rotor 41 in the second direction and positions the rotor 41 at the valve opening position Ro. The electric valve control device inputs pulses P starting from pulse P1 in positioning the rotor 41 at the valve opening position Ro. Pulse P1 is pulse P corresponding to the specific excitation pattern. The number of pulses required to rotate the rotor 41 from the reference position Rx to the valve opening position Ro (a valve opening pulse number C) is a reference number Cs (for example, Cs = 50).

Fig. 10 illustrates a configuration in which the stator unit 7 is mounted around the axis L in a correct position with respect to the valve body assembly 5A when the projecting portion 81 of the mounting tab 80 is secured to the hole 24 [5] of the mounting plate 23A. In this configuration, the magnetic poles of the rotor 41 radially face the pole teeth 61a and 61b of the A-phase stator 61 when the rotor 41 is at the reference position Rx. The positional relationship between the rotor 41 and the stator 60 (A-phase stator 61, B-phase stator 62) is described by focusing on one magnetic pole (magnetic pole 41s) of the rotor 41, one pole tooth (pole tooth 61s) of the A-phase stator 61, and one pole tooth (pole tooth 62s) of B-phase stator 62. The magnetic pole 41s, the pole tooth 61s, and the pole tooth 62s are marked with a dot for easy understanding of the positional relationship.

In the configuration illustrated in Fig. 10, when pulse P1 is input to the stepping motor 66, the pole tooth 61s attracts the magnetic pole 41s. Consequently, as illustrated in Fig. 11, the magnetic pole 41s radially faces the pole tooth 61s. At this time, the movable stopper 42s is in contact with the fixed stopper 44s, and the rotor 41 is at the reference position Rx. Next, when pulse P2 is input to the stepping motor 66, the pole tooth 61s and the pole tooth 62s attract the magnetic pole 41s. Consequently, as illustrated in Fig. 12, the rotor 41 rotates by the step angle θ in the second direction from the reference position Rx where the rotor 41 is located in Fig. 11. Next, when pulse P3 is input to the stepping motor 66, the pole tooth 62s attracts the magnetic pole 41s. Consequently, as illustrated in Fig. 13, the rotor 41 rotates by the step angle θ in the second direction from the position where the rotor is located in Fig. 12, and the magnetic pole 41s radially faces the pole tooth 62s. Thereafter, when pulses P are cyclically input in ascending order, the rotor 41 rotates by the step angle θ in the second direction in response to pulse P being input. When the number of pulses P being input reaches the reference number Cs, the rotor 41 is correctly positioned at the valve opening position Ro.

Fig. 14 illustrates a configuration in which the stator unit 7 is mounted in a position where the stator unit 7 is rotated around the axis L by the step angle θ in the first direction from the correct position with respect to the valve body assembly 5A when the projecting portion 81 of the mounting tab 80 is secured to the hole 24 [5] of the mounting plate 23A. In this configuration, when the rotor 41 is at the reference position Rx, the magnetic pole 41s of the rotor 41 is at a position where the magnetic pole 41s is rotated by the step angle θ in the second direction from a position where the magnetic pole 41s radially faces the pole tooth 61s of the A-phase stator 61.

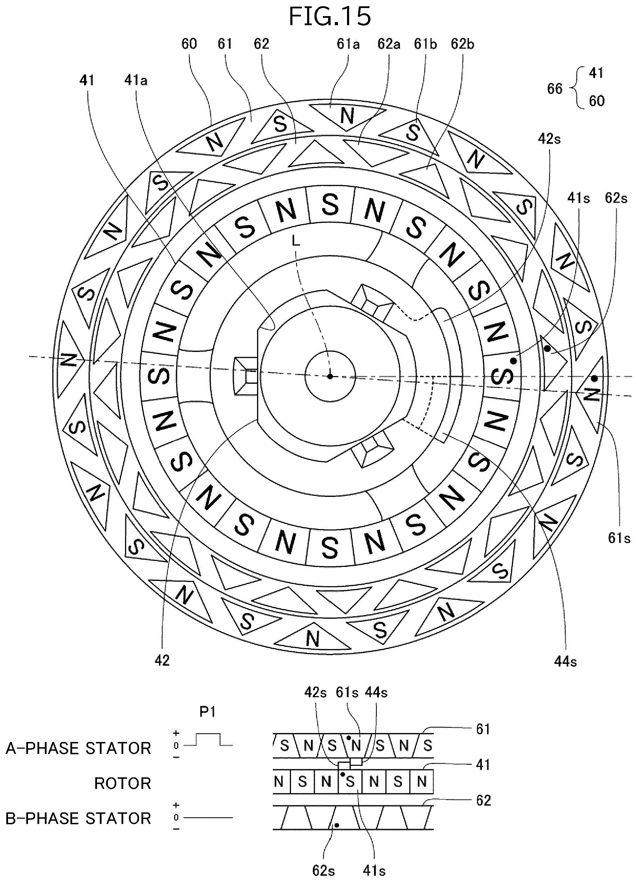

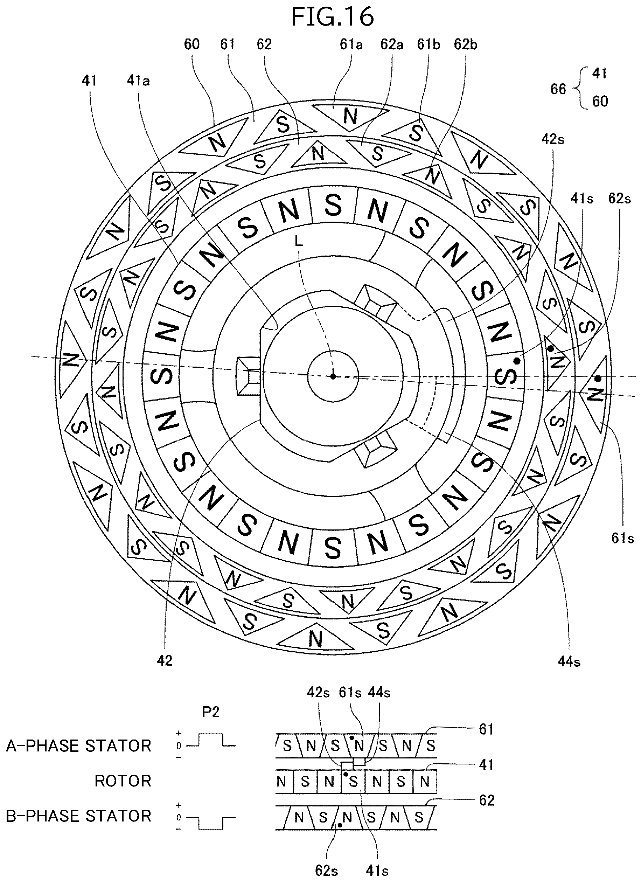

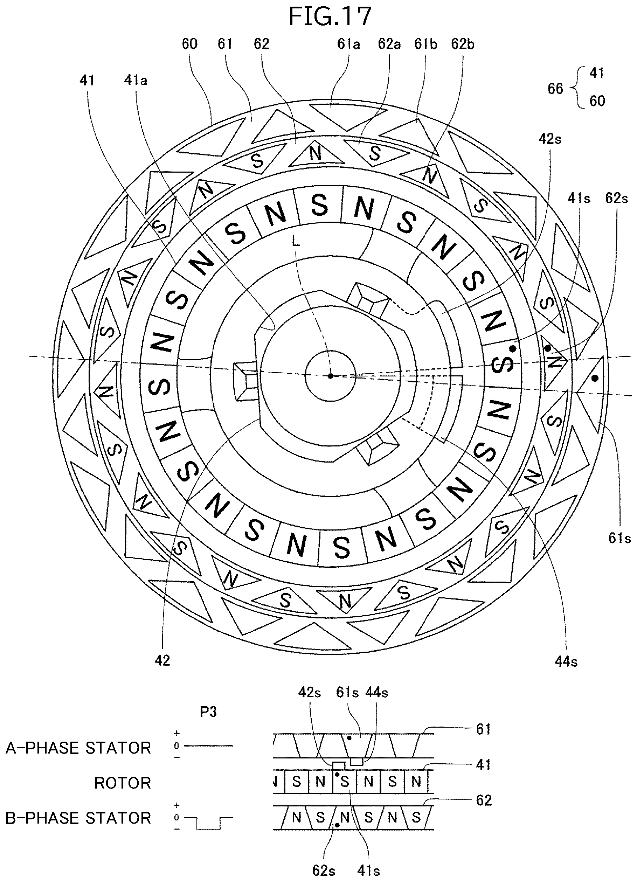

In the configuration illustrated in Fig. 14, when pulse P1 is input to the stepping motor 66, the pole tooth 61s attracts the magnetic pole 41s. However, the movable stopper 42s is in contact with the fixed stopper 44s, which restricts the rotation of the rotor 41 in the first direction. Consequently, as illustrated in Fig. 15, the magnetic pole 41s does not radially face the pole tooth 61s, even though the rotor 41 is positioned at the reference position Rx. Next, when pulse P2 is input to the stepping motor 66, the pole tooth 61s and the pole tooth 62s attract the magnetic pole 41s. At this time, the rotor 41 does not rotate, and the rotor 41 is maintained at the reference position Rx as illustrated in Fig. 16. Next, when pulse P3 is input to the stepping motor 66, the pole tooth 62s attracts the magnetic pole 41s. Consequently, as illustrated in Fig. 17, the rotor 41 rotates by the step angle θ in the second direction from the reference position Rx, and the magnetic pole 41s radially faces the pole tooth 62s. Thereafter, when pulses P are cyclically input in ascending order, the rotor 41 rotates by the step angle θ in the second direction in response to pulse P being input. When the number of pulses P being input reaches the reference number Cs, the rotor 41 is positioned at a position where the angle from the reference position Rx around the axis L is smaller than the angle of the valve opening position Ro by the step angle θ. That is, the valve opening pulse number C in this configuration is the reference number Cs plus one. Therefore, the projecting portion 81 is secured to the hole 24[4] instead of the hole 24[5] in the electric valve 1. This enables the rotor 41 to be at the reference position Rx and the magnetic poles of the rotor 41 to radially face the pole teeth 61a and the pole teeth 61b of the A-phase stator 61 when pulse P1 is input to the stepping motor 66. As a result, when the number of pulses P being input to the stepping motor 66 reaches the reference number Cs, the rotor 41 is correctly positioned at the valve opening position Ro.

Fig. 18 illustrates a configuration in which the stator unit 7 is mounted in a position where the stator unit 7 is rotated around the axis L by the step angle θ in the second direction from the correct position with respect to the valve body assembly 5A when the projecting portion 81 of the mounting tab 80 is secured to the hole 24[5] of the mounting plate 23A. In this configuration, when the rotor 41 is at the reference position Rx, the magnetic pole 41s of the rotor 41 is at a position where the magnetic pole 41s is rotated by the step angle θ in the first direction from a position where the magnetic pole 41s radially faces the pole tooth 61s of the A-phase stator 61.

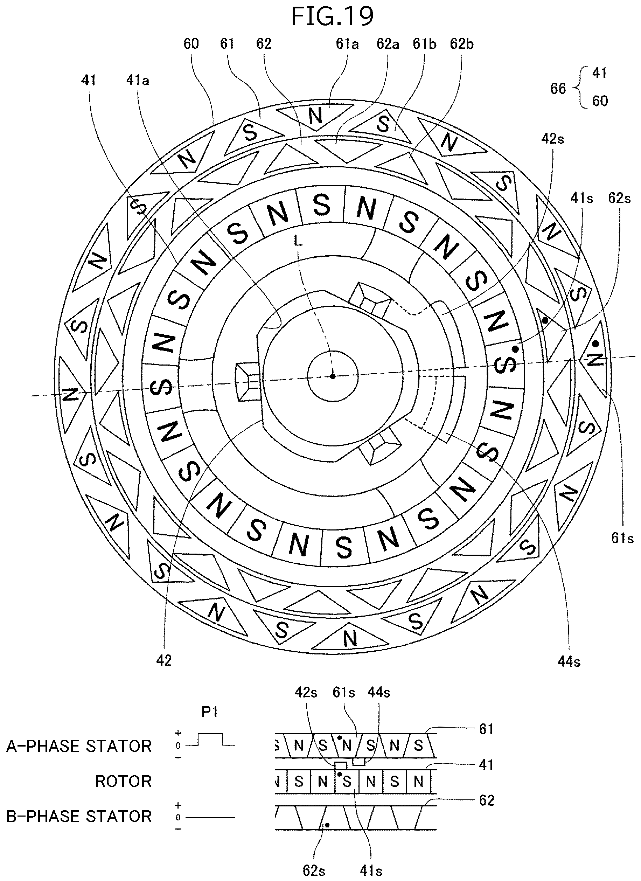

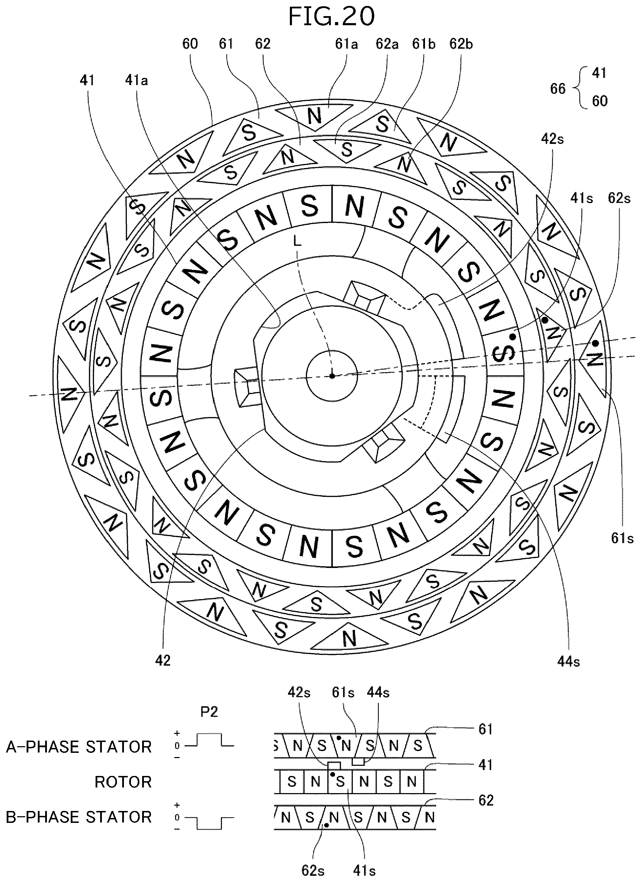

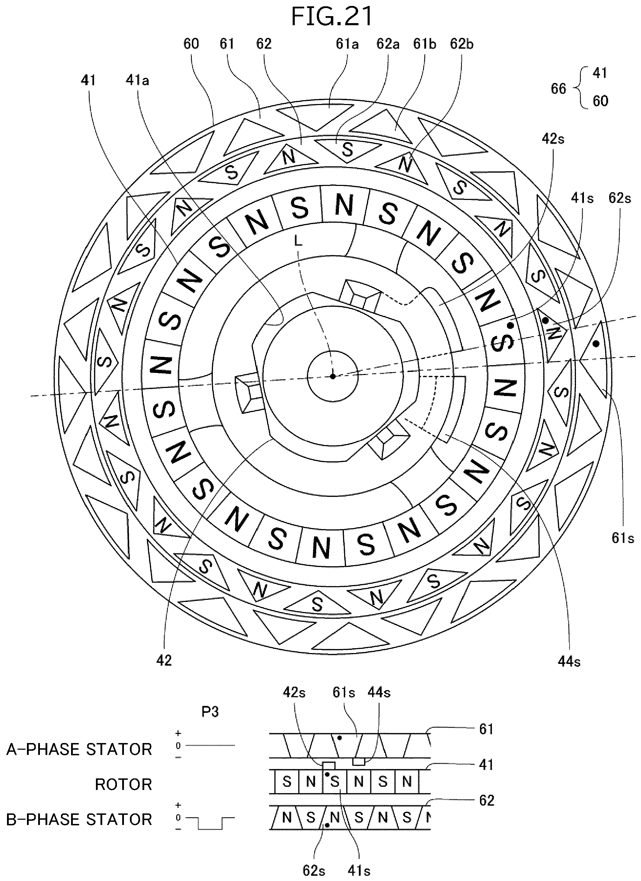

In the configuration illustrated in Fig. 18, when pulse P1 is input to the stepping motor 66, the pole tooth 61s attracts the magnetic pole 41s. Consequently, as illustrated in Fig. 19, the rotor 41 is positioned at a position where the rotor 41 is rotated by the step angle θ in the second direction from the reference position Rx where the rotor 41 is located in Fig. 18, and the magnetic pole 41s radially faces the pole tooth 61s. Next, when pulse P2 is input to the stepping motor 66, the pole tooth 61s and the pole tooth 62s attract the magnetic pole 41s. Consequently, as illustrated in Fig. 20, the rotor 41 rotates by the step angle θ in the second direction from the position where the rotor 41 is located in Fig.19. Next, when pulse P3 is input to the stepping motor 66, the pole tooth 62s attracts the magnetic pole 41s. Consequently, as illustrated in Fig. 21, the rotor 41 is positioned at a position where the rotor 41 is rotated by the step angle θ in the second direction from the position where the rotor 41 is located in Fig. 20, and the magnetic pole 41s radially faces the pole tooth 62s. Thereafter, when pulses P are cyclically input in ascending order, the rotor 41 rotates by the step angle θ in the second direction in response to pulse P being input. When the number of pulses P being input reaches the reference number Cs, the rotor 41 is positioned at a position where the angle from the reference position Rx around the axis L is larger than the angle of the valve opening position Ro by the step angle θ. That is, the valve opening pulse number C in this configuration is the reference number Cs minus 1. Therefore, the projecting portion 81 is secured to the hole 24[6] instead of the hole 24[5] in the electric valve 1. This enables the rotor 41 to be at the reference position Rx and the magnetic poles of the rotor 41 to radially face the pole teeth 61a and the pole teeth 61b of the A-phase stator 61 when pulse P1 is input to the stepping motor 66. As a result, when the number of pulses P being input to the stepping motor 66 reaches the reference number Cs, the rotor 41 is correctly positioned at the valve opening position Ro.

In the electric valve 1, the stator unit mounting position in which the stator unit 7 is mounted is changed, thereby enabling the valve opening pulse number C to vary. As a result, the valve opening pulse number C of the electric valve 1 can be adjusted to the reference number Cs.

Fig. 14 to Fig. 17 illustrate a configuration in which the valve opening pulse number C is more than the reference number Cs by 1, and Fig. 18 to Fig. 21 illustrate a configuration in which the valve opening pulse number C is less than the reference number Cs by 1. In addition to these configurations, even in configurations where the valve opening pulse number C is less than the reference number Cs by 2 to 4 or is more than the reference number Cs by 2 to 4, the rotor 41 can be adjusted to be correctly positioned at the valve opening position Ro by changing the hole 24 to which the projecting portion 81 is secured as described above. Preferably, the electric valve 1 has at least the same number of holes 24 as the number M of excitation patterns. It is sufficient that the electric valve 1 have two or more holes 24. For example, if the variation in the valve opening pulse number C among electric valves 1 can be suppressed within ± 1 by increasing accuracy of components and accuracy of assembling components, three holes 24 are enough for the electric valves 1.

The electric valve 1 includes the valve body assembly 5A and the stator unit 7 that is mounted on the valve body assembly 5A. The valve body assembly 5A includes the valve body 10 that includes the valve seat 18, the rotor 41 that is rotatable with respect to the valve body 10, the valve member 30 that faces the valve seat 18 and moves toward the valve seat 18 when the rotor 41 rotates in the first direction, and the stopper mechanism 49 that restricts the rotation of the rotor 41 in the first direction when the rotor is at the reference position Rx. The stator unit 7 includes the stator 60 that is disposed coaxially with the rotor 41 and constitutes the stepping motor 66 together with the rotor 41. The electric valve 1 includes the mounting positions in which the stator unit 7 is mounted on the valve body assembly 5A, and the mounting positions are referred to as "stator unit mounting positions". Where θ represents the step angle of the stepping motor 66, M represents the number of excitation patterns of the stepping motor 66, K represents the number of the stator unit mounting positions, and U represents any integer, the angle dα[j] (j = 1, 2, ..., K - 1) around the axis between the j-th stator unit mounting position and the (j + 1)-th stator unit mounting position is a multiple of the step angle θ, and the expression (1) is satisfied.

With this configuration, the angle dα around the axis L between one stator unit mounting position and another stator unit mounting position adjacent to the one stator unit mounting position can be prevented from being a multiple of a number that is the number M of the excitation patterns multiplied by the step angle θ. Therefore, the stator unit 7 is mounted on the valve body assembly 5A in another stator unit mounting position instead of the one stator unit mounting position, thereby enabling the position of the rotor 41 when pulse P corresponding to the specific excitation pattern is input to the stepping motor 66 to be changed by a multiple of the step angle θ. The step angle θ corresponds to one pulse P to be input to the stepping motor 66.
As a result, when the valve opening pulse number C is greater or less than the reference number Cs in the electric valve 1, the stator unit 7 is mounted in another stator unit mounting position instead of the one stator unit mounting position. This enables the valve opening pulse number C to be adjusted. Accordingly, it is possible to decrease the variation in the valve opening pulse number C among the electric valves 1.

The angle α[k] (k = 1, 2, ..., K) of the k-th stator unit mounting position around the axis L is represented by the expression (2A).

With this configuration, the angle of the stator 60 around the axis L with respect to the valve body assembly 5A can be changed by the step angle θ by changing the stator unit mounting position in which the stator unit 7 is mounted. Therefore, when the valve opening pulse number C is greater or less than the reference number Cs in the electric valve 1, the stator unit 7 is mounted in another stator unit mounting position instead of the present stator unit mounting position. This enables the valve opening pulse number C to be adjusted. Accordingly, it is possible to decrease the variation in the valve opening pulse number C among the electric valves 1. The angle α[k] may be represented by the following expression (2'). $α \left[k\right] = \left(M\times N-1\right) \times \left(k-1\right) \times θ$ (2')

The valve body assembly 5A includes the holes 24 corresponding to the stator unit mounting positions. The stator unit 7 includes one projecting portion 81 that can be aligned with any one of the holes 24. The stator unit 7 is mounted on the valve body assembly 5A in one of the stator unit mounting positions corresponding to one of the holes 24 by the projecting portion 81 being secured to the one of the holes 24. As a result, with a relatively simple configuration, the stator unit 7 can be mounted on the valve body assembly 5A.

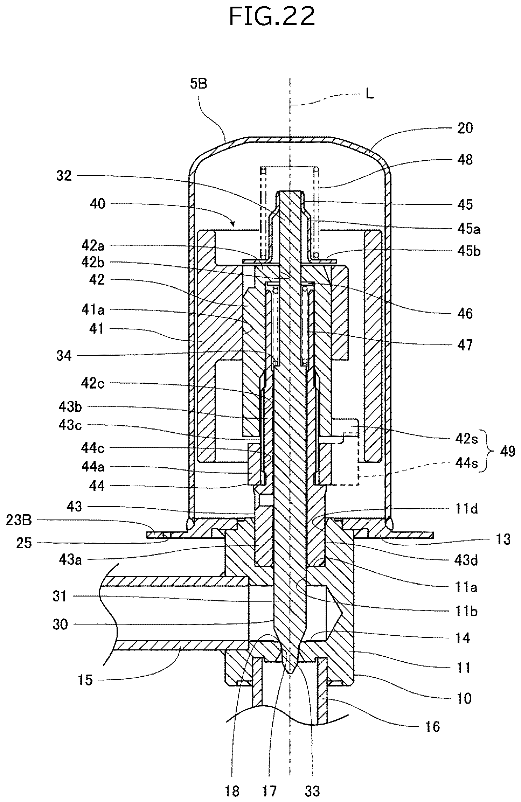

Next, modifications of the valve body assembly 5A according to the first embodiment are described with reference to Fig. 22 to Fig. 25.

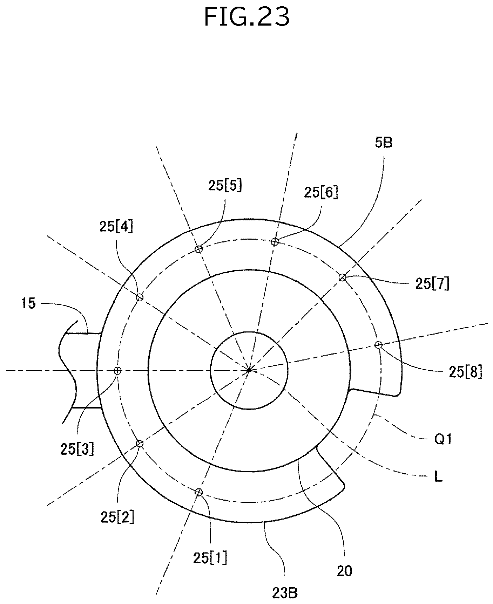

Fig. 22 and Fig. 23 illustrate a valve body assembly 5B according to a first modification. The valve body assembly 5B has the same configuration as that of the valve body assembly 5A except that the valve body assembly 5B includes, instead of the mounting plate 23A, a mounting plate 23B with multiple holes 25. In this specification, "same configuration" includes the meanings of "same configuration" and "substantially same configuration".

The mounting plate 23B has a circular arc shape. The central angle of the circular arc shape of the mounting plate 23B is approximately 320 degrees. The inner edge of the mounting plate 23B is integrally connected to the outer peripheral edge of a connection member 13. The connection member 13 and the mounting plate 23B constitute a single component. An axis L passes through the center of the circular arc shape of the mounting plate 23B and the center of the connection member 13. The mounting plate 23B protrudes radially outward from the connection member 13. The mounting plate 23B has the multiple holes 25. The holes 25 have a circular shape and extend through the mounting plate 23B. Each of the holes 25 is a receiving portion. The mounting plate 23B has 8 holes 25 (holes 25[1] to 25[8]). The holes 25[1] to 25[8] are on a circle Q1. A projecting portion 81 can be aligned with any one of the holes 25[1] to 25[8]. The holes 25[1] to 25[8] correspond to multiple stator unit mounting positions.

In the present modification,
1: when an angle α[1] of the hole 25[1] around the axis L is 0 degrees,
2: an angle α[2] of the hole 25[2] around the axis L is 33.75 degrees in a first direction,
3: an angle α[3] of the hole 25[3] around the axis L is 67.5 degrees in the first direction,
4: an angle α[4] of the hole 25[4] around the axis L is 101.25 degrees in the first direction,
5: an angle α[5] of the hole 25[5] around the axis L is 135 degrees in the first direction,
6: an angle α[6] of the hole 25[6] around the axis L is 168.75 degrees in the first direction,
7: an angle α[7] of the hole 25[7] around the axis L is 202.5 degrees in the first direction, and
8: an angle α[8] of the hole 25[8] around the axis L is 236.25 degrees in the first direction.
The angles of the holes 25[1] to 25[8] around the axis L increase by 33.75 degrees in the first direction.

In the holes 25[1] to 25[8], an angle dα[j] (j = 1 to 7) around the axis L between a j-th hole 25[j] and a (j + 1)-th hole 25[j + 1] is 33.75 degrees. An angle around the axis L between the stator unit 7 with the projecting portion 81 aligned with the hole 25[j] and the stator unit 7 with the projecting portion 81 aligned with the hole 25[j + 1] is the angle dα[j].

In the present embodiment, the angle dα[j] around the axis L between any two holes 25 adjacent to each other is 33.75 degrees. It is sufficient that the angle dα[j] be a multiple of the step angle θ and satisfy the expression (1). Respective angles dα[j] may be different from each other.

The angle α[k] (k = 1 to 8) of a k-th hole 25[k] around the axis L is represented by the following expression (2B). The step angle θ of a stepping motor 66 is 3.75 degrees, the number M of excitation patterns is 8, and an integer N is 1. $α \left[k\right] = \left(M\times N+1\right) \times \left(k-1\right) \times θ = \left(k-1\right) \times 33.75$ (2B)

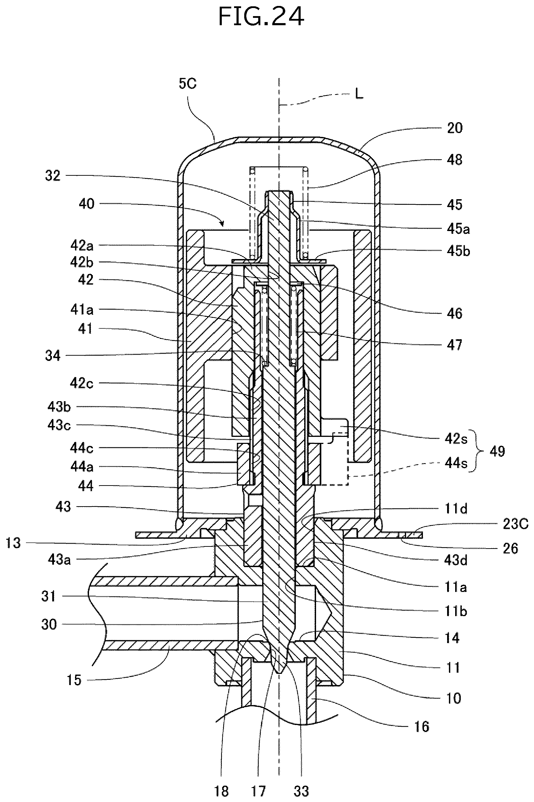

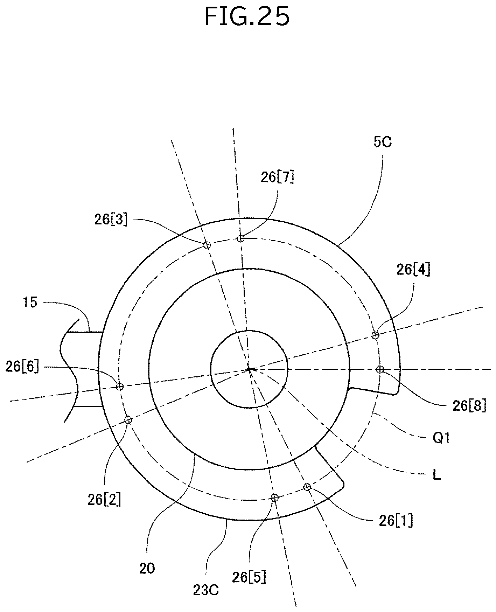

Fig. 24 and Fig. 25 illustrate a valve body assembly 5C according to a second modification. The valve body assembly 5C has the same configuration as that of the valve body assembly 5A except that the valve body assembly 5C includes, instead of the mounting plate 23A, a mounting plate 23C with multiple holes 26.

The mounting plate 23C has a circular arc shape. The central angle of the circular arc shape of the mounting plate 23C is approximately 320 degrees. The inner edge of the mounting plate 23C is integrally connected to the outer peripheral edge of a connection member 13. The connection member 13 and the mounting plate 23C constitute a single component. An axis L passes through the center of the circular arc shape of the mounting plate 23C and the center of the connection member 13. The mounting plate 23C protrudes radially outward from the connection member 13. The mounting plate 23C has multiple holes 26. The holes 26 have a circular shape and extend through the mounting plate 23C. Each of the holes 26 is a receiving portion. The mounting plate 23C has 8 holes 26 (holes 26[1] to 25[8]). The holes 26[1] to 25[8] are on a circle Q1. A projecting portion 81 can be aligned with any of the holes 26[1] to 26[8]. The holes 26[1] to 26[8] correspond to multiple stator unit mounting positions.

In the present modification,
1: when an angle α[1] of the hole 26[1] around the axis L is 0 degrees,
2: an angle α[2] of the hole 26[2] around the axis L is 93.75 degrees in a first direction,
3: an angle α[3] of the hole 26[3] around the axis L is 187.5 degrees in the first direction,
4: an angle α[4] of the hole 26[4] around the axis L is 281.25 degrees in the first direction,
5: an angle α[5] of the hole 26[5] around the axis L is 375 degrees in the first direction,
6: an angle α[6] of the hole 25[6] around the axis L is 468.75 degrees in the first direction,
7: an angle α[7] of the hole 26[7] around the axis L is 562.5 degrees in the first direction, and
8: an angle α[8] of the hole 26[8] around the axis L is 656.25 degrees in the first direction.
The angles of the holes 26[1] to 26[8] around the axis L increase by 93.75 degrees in the first direction.

In the holes 26[1] to 26[8], an angle dα[j] (j = 1 to 7) around the axis L between a j-th hole 26[j] and a (j + 1)-th hole 26[j + 1] is 93.75 degrees. An angle around the axis L between the stator unit 7 with the projecting portion 81 aligned with the hole 26[j] and the stator unit 7 with the projecting portion 81 aligned with the hole 26[j + 1] is the angle dα[j].

In the present embodiment, the angle dα[j] around the axis L between any two sequentially numbered holes 26 is 93.75 degrees. It is sufficient that the angle dα[j] be a multiple of the step angle θ and satisfy the expression (1). Respective angles dα[j] may be different from each other.

The angle α[k] (k = 1 to 8) of a k-th hole 26[k] around the axis L is represented by the following expression (2C). The step angle θ of a stepping motor 66 is 3.75 degrees, the number M of excitation patterns is 8, and an integer N is 3. $α \left[k\right] = \left(M\times N+1\right) \times \left(k-1\right) \times θ = \left(k-1\right) \times 93.75$ (2C)

The electric valve including the valve body assembly 5B or the valve body assembly 5C also has the same (including substantially the same) functions and effects as those of the electric valve 1 described above. In the electric valve including the valve body assembly 5B or the valve body assembly 5C, the stator unit mounting position in which the stator unit 7 is mounted is changed, thereby enabling a valve opening pulse number C to vary. As a result, the valve opening pulse number C of the electric valve can be adjusted to a reference number Cs.

### (Second Embodiment)

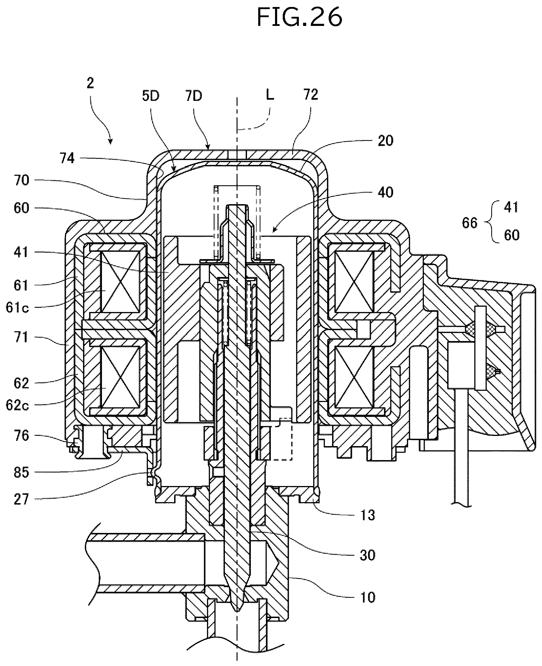

An electric valve according to a second embodiment of the present invention is described below with reference to Fig. 26 to Fig. 28.

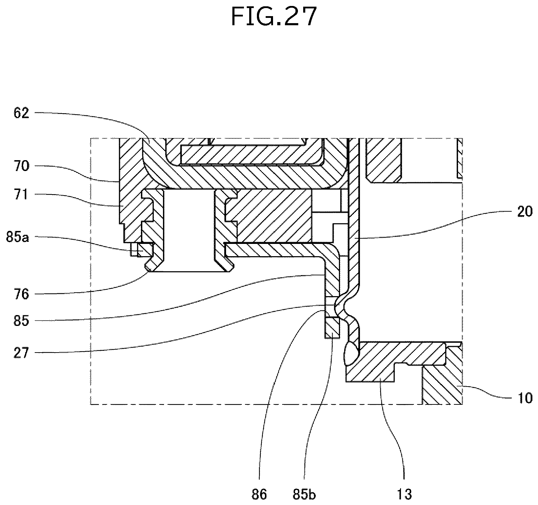

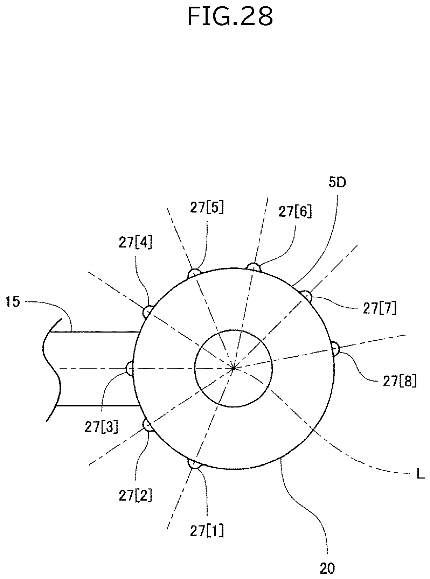

Fig. 26 is a sectional view of the electric valve according to the second embodiment of the present invention. Fig. 27 is an enlarged sectional view of a part (mainly a lower end portion of a can and a mounting tab) of the electric valve in Fig. 26. Fig. 28 is a plan view of a valve body assembly of the electric valve in Fig. 26. In the description below, elements having the same configurations as those of the electric valve 1 are denoted by the same reference signs as those of the electric valve 1, and detailed descriptions of these elements are omitted.

As illustrated in Fig. 26, an electric valve 2 according to the second embodiment includes a valve body assembly 5D and a stator unit 7D.

The valve body assembly 5D has the same configuration as that of the valve body assembly 5A described above except that (a) the valve body assembly 5D does not include the mounting plate 23A, and (b) a can 20 includes multiple projecting portions 27.

The stator unit 7D has the same configuration as that of the stator unit 7 described above except that (c) the stator unit 7D includes a mounting tab 85 in an L-shape instead of the mounting tab 80 in the crank shape.

The projecting portions 27 are disposed at the lower end portion of the can 20 and protrude radially outward. Each of the projecting portions 27 is a receiving portion. In the present embodiment, the can 20 has 8 projecting portions 27 (projecting portions 27[1] to 27[8]).

The mounting tab 85 is a rectangular metal plate bent into the L-shape. A first end portion 85a of the mounting tab 85 is caulked to a conductive member 76. A second end portion 85b of the mounting tab 85 is disposed parallel to the can 20. The mounting tab 85 has a hole 86. The hole 86 is in the second end portion 85b of the mounting tab 85. The hole 86 has a circular shape and extends through the mounting tab 85. The hole 86 is a mounting portion.

The hole 86 can be aligned with any one of the projecting portions 27[1] to 27[8] of the can 20. Specifically, when the stator unit 7D is rotated around an axis L clockwise in plan view, the tip ends of the projecting portions 27[1] to 27[8] fit into the hole 86 in order. When the tip end of one of the projecting portions 27[1] to 27[8] fits into the hole 86, the one of the projecting portions 27 is secured to the hole 86, and the stator unit 7D is positioned with respect to the valve body assembly 5D. The electric valve 2 includes multiple mounting positions in which the stator unit 7D is mounted on the valve body assembly 5D, and the mounting positions are referred to as "stator unit mounting positions". The stator unit mounting positions correspond to the projecting portions 27[1] to 27[8].

In the present embodiment,
1: when an angle α[1] of the projecting portion 27[1] around the axis L is 0 degrees,
2: an angle α[2] of the projecting portion 27[2] around the axis L is 33.75 degrees in a first direction,
3: an angle α[3] of the projecting portion 27[3] around the axis L is 67.5 degrees in the first direction,
4: an angle α[4] of the projecting portion 27[4] around the axis L is 101.25 degrees in the first direction,
5: an angle α[5] of the projecting portion 27[5] around the axis L is 135 degrees in the first direction,
6: an angle α[6] of the projecting portion 27[6] around the axis L is 168.75 degrees in the first direction,
7: an angle α[7] of the projecting portion 27[7] around the axis L is 202.5 degrees in the first direction, and
8: an angle α[8] of the projecting portion 27[8] around the axis L is 236.25 degrees in the first direction.
The angles of the projecting portions 27[1] to 27[8] around the axis L increase by 33.75 degrees in the first direction.

In the projecting portions 27[1] to 27[8], an angle dα[j] (j = 1 to 7) around the axis L between a j-th projecting portion 27[j] and a (j + 1)-th projecting portion 27[j + 1] is 33.75 degrees. An angle around the axis L between the stator unit 7D with the hole 86 aligned with the projecting portion 27[j] and the stator unit 7D with the hole 86 aligned with the projecting portion 27[j + 1] is the angle dα[j].

In the present embodiment, the angle dα[j] around the axis L between any two projecting portions 27 adjacent to each other is 33.75 degrees. It is sufficient that the angle dα[j] be a multiple of the step angle θ and satisfy the expression (1). Respective angles dα[j] may be different from each other.

The angle α[k] (k = 1 to 8) of a k-th projecting portion 27[k] around the axis L is represented by the expression (2B).

The electric valve 2 according to the second embodiment also has the same (including substantially the same) functions and effects as those of the electric valve 1 described above. In the electric valve 2, the stator unit mounting position in which the stator unit 7D is mounted is changed, thereby enabling a valve opening pulse number C to vary. As a result, the valve opening pulse number C of the electric valve 2 can be adjusted to a reference number Cs.

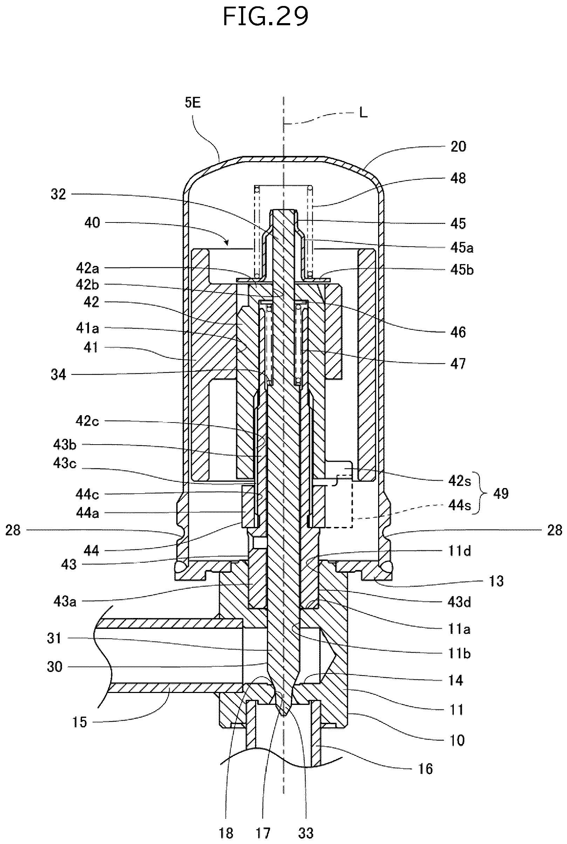

The electric valve 2 according to the present embodiment may include a valve body assembly 5E illustrated in Fig. 29 instead of the valve body assembly 5D. The valve body assembly 5E includes multiple recesses 28 at the lower end portion of the can 20. The recesses 28 correspond to multiple stator unit mounting positions. The electric valve 2 includes a stator unit (not illustrated) that includes a projecting portion that can be aligned with any one of the recesses 28. In this configuration, where θ represents a step angle of the stepping motor 66, M represents a number of excitation patterns, and N represents an integer, the angle α[k] of the k-th recess 28[k] around the axis L is represented by the following expression (2). $α \left[k\right] = \left(M\times N+1\right) \times \left(k-1\right) \times θ$ (2)

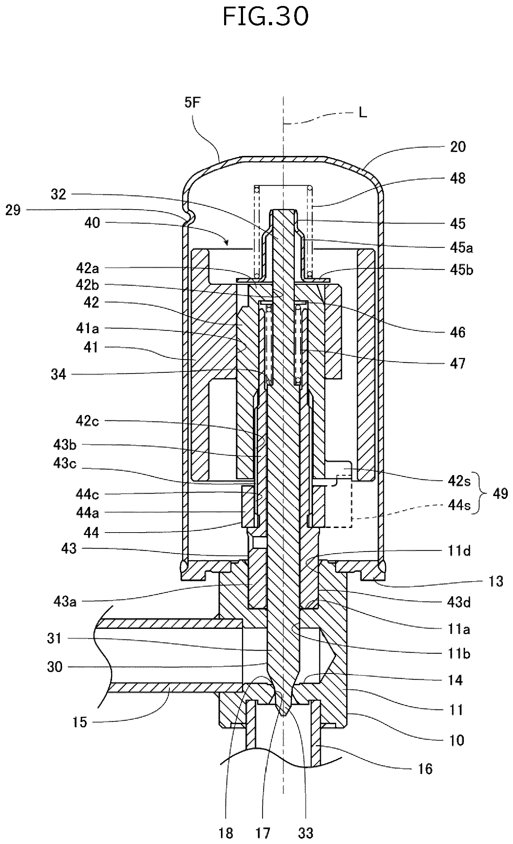

Alternatively, the electric valve 2 may include a valve body assembly 5F illustrated in Fig. 30 instead of the valve body assembly 5D. The valve body assembly 5F includes multiple recesses 29 at the upper portion of the can 20. The recesses 29 correspond to multiple stator unit mounting positions. The electric valve 2 includes the stator unit (not illustrated) that includes a projecting portion that can be aligned with any one of the recesses 29. In this configuration, where θ represents the step angle of the stepping motor 66 and M represents the number of excitation patterns, an angle α[k] of a k-th recess 29[k] around the axis L is represented by the expression (2).

### (Third Embodiment)

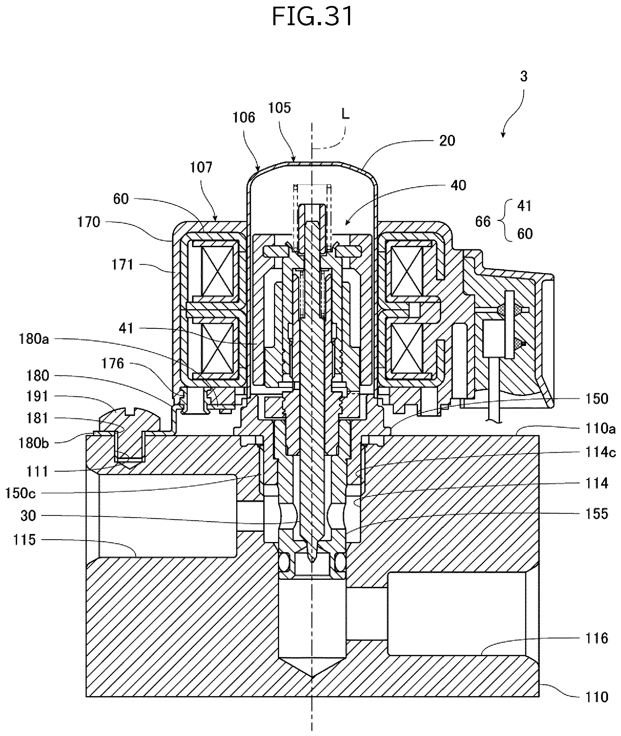

An electric valve according to a third embodiment of the present invention is described below with reference to Fig. 31 to Fig. 33.

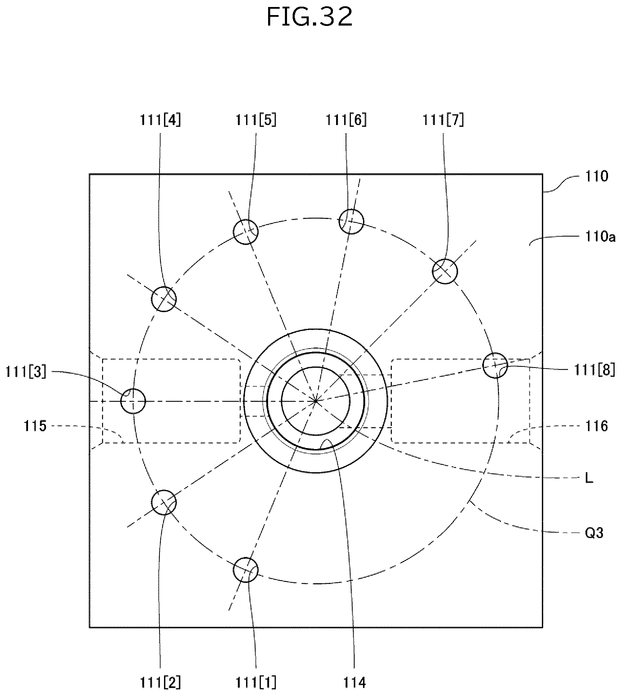

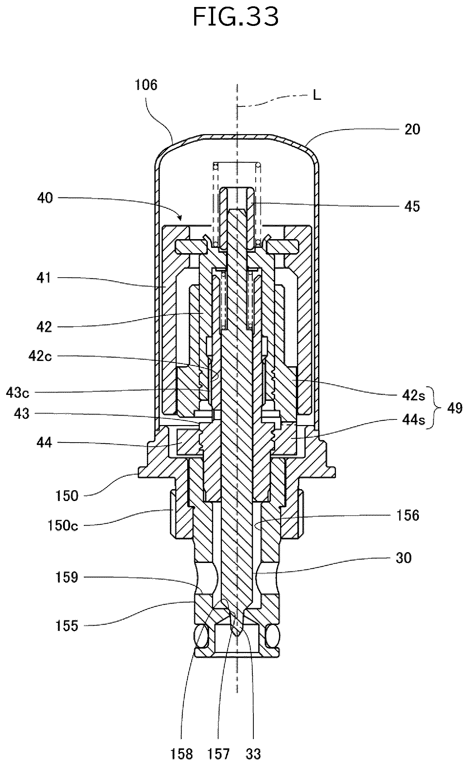

Fig. 31 is a sectional view of the electric valve according to the third embodiment of the present invention. Fig. 32 is a plan view of a valve body of the electric valve in Fig. 31. Fig. 33 is a sectional view of a rotor unit of the electric valve in Fig. 31. In the description below, elements having the same configurations as those of the electric valve 1 are denoted by the same reference signs as those of the electric valve 1, and detailed descriptions of these elements are omitted.

As illustrated in Fig. 31, an electric valve 3 according to the third embodiment includes a valve body 110, a rotor unit 106, a stator unit 107, and a threaded member 191. The valve body 110 and the rotor unit 106 are members of a valve body assembly 105.

The valve body 110 is made of a metal such as an aluminum alloy. The valve body 110 has a rectangular parallelepiped shape. The valve body 110 has a mounting hole 114. The mounting hole 114 is in an upper surface 110a of the valve body 110. The inner circumferential surface of the mounting hole 114 has an internal thread 114c. The valve body 110 includes a flow channel 115 and a flow channel 116. The flow channel 116 is connected to the flow channel 115 via the mounting hole 114.

As illustrated in Fig. 32, the valve body 110 has multiple internal thread holes 111. The multiple internal thread holes 111 are in the upper surface 110a of the valve body 110. The inner circumferential surface of each of the internal thread holes 111 has an internal thread. In the present embodiment, the valve body 110 has 8 internal thread holes 111 (internal thread holes 111[1] to 111[8]). The internal thread holes 111[1] to 111[8] are on a circle Q3. An axis L passes through the center of the circle Q3.

The rotor unit 106 includes a can 20, a valve member 30, a driving section 40, a mounting member 150, and a valve seat member 155.

The mounting member 150 has a circular cylindrical shape. The outer circumferential surface of the mounting member 150 has an external thread 150c. The external thread 150c is disposed on the lower part of the outer circumferential surface. The external thread 150c of the mounting member 150 is screwed into the internal thread 114c of the mounting hole 114 of the valve body 110. The mounting member 150 is mounted to the mounting hole 114 of the valve body 110 by a screw structure. The upper part of the mounting member 150 protrudes from the upper surface 110a of the valve body 110. The lower end portion of the can 20 is bonded to the upper part of the mounting member 150.

The valve seat member 155 has a circular cylindrical shape. The valve seat member 155 includes a valve chamber 156. The valve seat member 155 includes a valve port 157 and a valve seat 158 that encloses the valve port 157. The valve seat member 155 is press-fitted downward into the mounting member 150 from the top. The upper part of the valve seat member 155 is held by the mounting member 150. A guide bush 43 is press-fitted into the upper part of the valve seat member 155. The lower part of the valve seat member 155 is disposed in the mounting hole 114 of the valve body 110. The valve seat member 155 has a lateral hole 159 that connects the valve chamber 156 and the mounting hole 114. The valve chamber 156 is connected to the flow channel 115 via the lateral hole 159 and the mounting hole 114. The valve chamber 156 is connected to the flow channel 116 via the valve port 157. A valve portion 33 of the valve member 30 is disposed in the valve port 157. A variable throttle is formed between the valve portion 33 and the valve port 157. The valve portion 33 faces the valve seat 158. The valve port 157 is closed when the valve portion 33 is in contact with the valve seat 158. The central axis of the mounting member 150 and the central axis of the valve seat member 155 are aligned with the axis L.

The stator unit 107 includes a stator 60, a housing 170, and a mounting tab 180.

The housing 170 is made of synthetic resin. The housing 170 is injection molded. The housing 170 houses the stator 60. The housing 170 includes a peripheral wall portion 171 in a circular cylindrical shape. The stator 60 is embedded in the peripheral wall portion 171.

The mounting tab 180 is a rectangular metal plate bent into a crank shape. A first end portion 180a of the mounting tab 180 is caulked to a conductive member 176 embedded in the lower end portion of the peripheral wall portion 171. A second end portion 180b of the mounting tab 180 is parallel to the upper surface 110a of the valve body 110. The second end portion 180b is in contact with the upper surface 110a. The mounting tab 180 has a hole 181. The hole 181 is in the second end portion 180b. The hole 181 has a circular shape and extends through the mounting tab 180. The hole 181 may have a cut-out shape that communicates with the area around the mounting tab 180. Examples of a through hole include such a shape.

The hole 181 can be aligned with any one of the internal thread holes 111[1] to 111[8] of the valve body 110. Specifically, when the stator unit 107 is rotated around the axis L clockwise in plan view, the position of the hole 181 matches with the positions of the internal thread holes 111[1] to 111[8] in order. When the threaded member 191 is disposed in the hole 181 and is screwed into any one of the internal thread holes 111[1] to 111[8], the mounting tab 180 is fixed to the valve body 110, and the stator unit 107 is positioned with respect to the valve body 110. The electric valve 3 includes multiple mounting positions in which the stator unit 107 is mounted on the valve body 110, the mounting positions are referred to as "stator unit mounting positions", and the stator unit mounting positions correspond to the internal thread holes 111[1] to 111[8].

In the present embodiment,
1: when an angle α[1] of the internal thread hole 111[1] around the axis L is 0 degrees,
2: an angle α[2] of the internal thread hole 111[2] around the axis L is 33.75 degrees in a first direction,
3: an angle α[3] of the internal thread hole 111[3] around the axis L is 67.5 degrees in the first direction,
4: an angle α[4] of the internal thread hole 111[4] around the axis L is 101.25 degrees in the first direction,
5: an angle α[5] of the internal thread hole 111[5] around the axis L is 135 degrees in the first direction,
6: an angle α[6] of the internal thread hole 111[6] around the axis L is 168.75 degrees in the first direction,
7: an angle α[7] of the internal thread hole 111[7] around the axis L is 202.5 degrees in the first direction, and
8: an angle α[8] of the internal thread hole 111[8] around the axis L is 236.25 degrees in the first direction.
The angles of the internal thread holes 111[1] to 111[8] around the axis L increase by 33.75 degrees in the first direction.

In the internal thread holes 111[1] to 111[8], an angle dα[j] (j = 1 to 8) around the axis L between a j-th internal thread hole 111 [j] and a (j + 1)-th internal thread hole 111[j + 1] is 33.75 degrees. An angle around the axis L between the stator unit 107 with the hole 181 aligned with the internal thread hole 111 [j] and the stator unit 107 with the hole 181 aligned with the internal thread hole 111[j + 1] is the angle dα[j].

In the present embodiment, the angle dα[j] around the axis L between any two internal thread holes 111 adjacent to each other is 33.75 degrees. It is sufficient that the angle dα[j] be a multiple of the step angle θ and satisfy the expression (1). Respective angles dα[j] may be different from each other.

The angle α[k] (k = 1 to 8) of a k-th internal thread hole 111[k] around the axis L is represented by the expression (2B).

The electric valve 3 according to the third embodiment also has the same (including substantially the same) functions and effects as those of the electric valve 1 described above. In the electric valve 3, the stator unit mounting position in which the stator unit 107 is mounted is changed, thereby enabling a valve opening pulse number C to vary. As a result, the valve opening pulse number C of the electric valve 3 can be adjusted to a reference number Cs.

The electric valve 3 includes the threaded member 191 with an external thread. The valve body assembly 105 includes the multiple internal thread holes 111 corresponding to the stator unit mounting positions. The stator unit 107 includes the hole 181 that can be aligned with any one of the internal thread holes 111. The stator unit 107 is mounted on the valve body assembly 105 in one of the stator unit mounting positions corresponding to one of the internal thread holes 111 by the threaded member 191 being disposed in the hole 181 and screwed into the one of the internal thread holes 111. As a result, with a relatively simple configuration, the stator unit 107 can be mounted on the valve body assembly 105.

### (Fourth Embodiment)

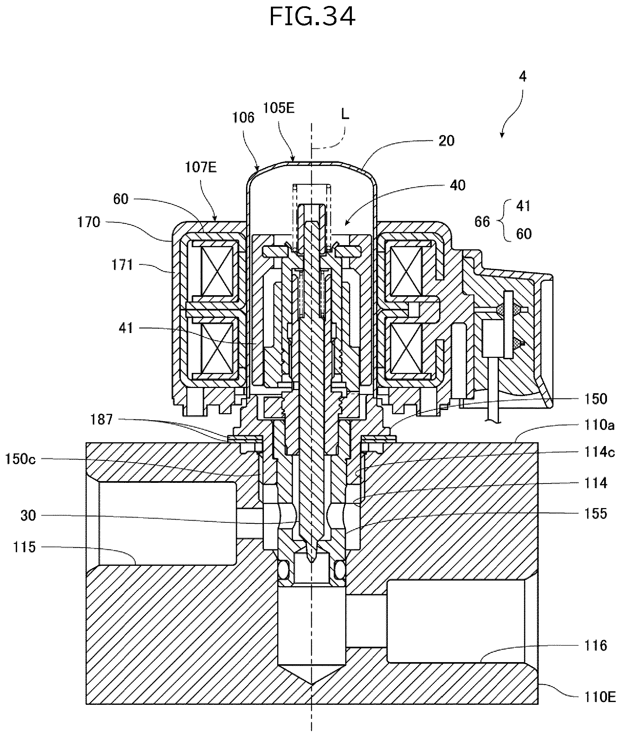

An electric valve according to a fourth embodiment of the present invention is described below with reference to Fig. 34 to Fig. 36.

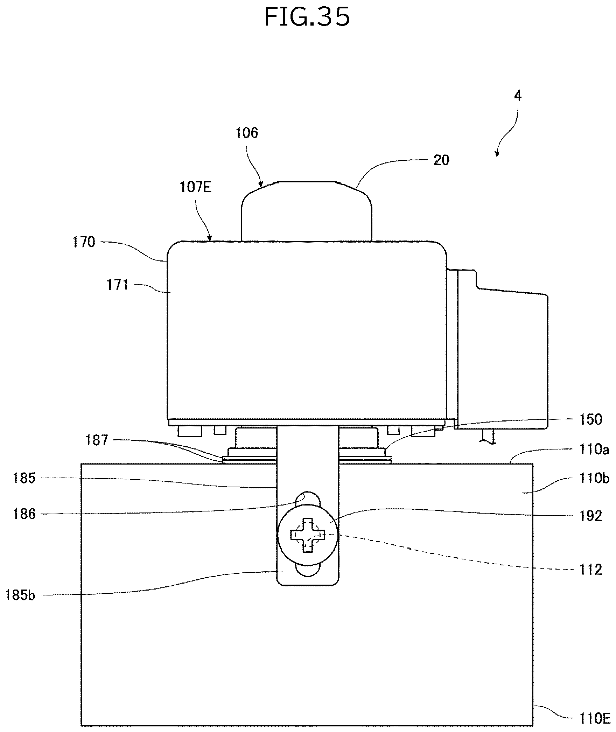

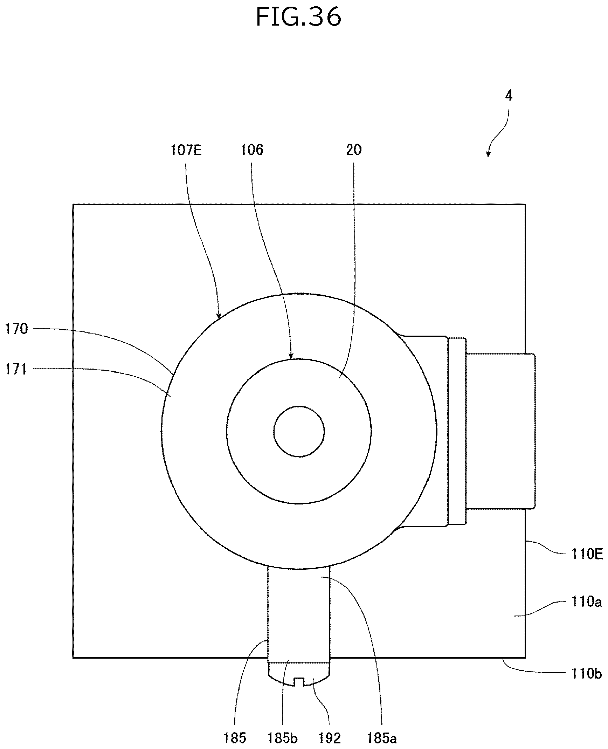

Fig. 34 is a sectional view of the electric valve according to the fourth embodiment of the present invention. Fig. 35 is a front view of the electric valve in Fig. 34. Fig. 36 is a plan view of the electric valve in Fig. 34. In the description below, elements having the same configurations as those of the electric valves 1 and 3 are denoted by the same reference signs as those of the electric valves 1 and 3, and detailed descriptions of these elements are omitted.

As illustrated in Fig. 34 to Fig. 36, an electric valve 4 according to the fourth embodiment includes a valve body 110E, a rotor unit 106, a stator unit 107E, a spacer 187, and a threaded member 192. The valve body 110E, the rotor unit 106, and the spacer 187 are members of a valve body assembly 105E.

The valve body 110E has the same configuration as that of the valve body 110 described above except that the valve body 110E includes, instead of the multiple internal thread holes 111, an internal thread hole 112 that is in a front surface 110b.

The stator unit 107E has the same configuration as that of the stator unit 107 described above except that the stator unit 107E includes a mounting tab 185 in an L-shape instead of the mounting tab 180 in the crank shape.

A first end portion 185a of the mounting tab 185 is caulked to a conductive member (not illustrated) embedded in the lower end portion of a peripheral wall portion 171. A second end portion 185b of the mounting tab 185 is parallel to the front surface 110b of the valve body 110E. The second end portion 185b is in contact with the front surface 110b. The mounting tab 185 has a hole 186. The hole 186 is in the second end portion 185b. The hole 186 is a long hole extending in an up-and-down direction in Fig. 35. The hole 186 extends through the mounting tab 185. The mounting tab 185 is fixed to the valve body 110E by the threaded member 192 being disposed in the hole 186 and screwed into the internal thread hole 112 of the valve body 110E, and the stator unit is positioned with respect to the valve body 110E. The electric valve 4 includes a mounting position in which the stator unit 107E is mounted on the valve body 110E.

The spacer 187 has a circular annular plate-like shape. A mounting member 150 of the rotor unit 106 is disposed in the spacer 187 and is screwed into a mounting hole 114 of the valve body 110E. The spacer 187 is located between the valve body 110E and the mounting member 150.

In the present embodiment, one to eight spacers 187 can be located between the valve body 110E and the mounting member 150. A rotational angle of the mounting member 150 corresponding to the thickness per spacer 187 when the mounting member 150 is screwed into the mounting hole 114 is a step angle θ. An angle of the rotor unit 106 around an axis L with respect to the valve body 110E corresponds to the number of spacers 187 located between the valve body 110E and the mounting member 150. The electric valve 4 includes multiple mounting positions in which the rotor unit 106 is mounted on the valve body 110E, and the mounting positions are referred to as "rotor unit mounting positions". The rotor unit mounting positions correspond to the number of the spacers 187. The number of the spacer 187 represents the sequential number of the rotor unit mounting positions. The rotor unit 106 can be mounted in any one of the rotor unit mounting positions.

In the present embodiment,
1: when an angle β[1] of the rotor unit 106 around the axis L when one spacer 187 is located is 0 degrees,
2: an angle β[2] of the rotor unit 106 around the axis L when two spacers 187 are located is 3.75 degrees in a first direction,
3: an angle β[3] of the rotor unit 106 around the axis L when three spacers 187 are located is 7.5 degrees in the first direction,
4: an angle β[4] of the rotor unit 106 around the axis L when four spacers 187 are located is 11.25 degrees in the first direction,
5: an angle β[5] of the rotor unit 106 around the axis L when five spacers 187 are located is 15 degrees in the first direction,
6: an angle β[6] of the rotor unit 106 around the axis L when six spacers 187 are located is 18.75 degrees in the first direction,
7: an angle β[7] of the rotor unit 106 around the axis L when seven spacers 187 are located is 22.5 degrees in the first direction, and
8: an angle β[8] of the rotor unit 106 around the axis L when eight spacers 187 are located is 26.25 degrees in the first direction.
Each additional spacer 187 increases the angle of the rotor unit 106 around the axis L by 3.75 degrees in the first direction.

An angle around the axis L between the rotor unit 106 with j (j = 1 to 7) spacer(s) being located and the rotor unit with j + 1 spacers being located is 3.75 degrees.

In the present embodiment, the angle dβ[j] around the axis L between two rotor units 106 hypothetically mounted in any two sequentially numbered rotor unit mounting positions is 3.75 degrees. It is sufficient that the angle dβ[j] be a multiple of the step angle θ and satisfy the following expression (3). Respective angles dβ[j] may be different from each other. M is the number of excitation patterns. U is any integer. $dβ \left[j\right] \neq M \times θ \times U$ (3)

Where k = 1 to 8, the angle β of the rotor unit mounting position around the axis L when k spacer(s) are located is represented by the following expression (4A). The step angle θ of a stepping motor 66 is 3.75 degrees, the number M of excitation patterns is 8, and the integer N is 0. $β \left[k\right] = \left(M\times N+1\right) \times \left(k-1\right) \times θ = \left(k-1\right) \times 3.75$ (4A)

The electric valve 4 according to the present embodiment includes the valve body 110E, the rotor unit 106 mounted on the valve body 110E, and the stator unit 107E mounted on the valve body 110E. The rotor unit 106 includes a valve seat member 155 that includes a valve seat 158, a rotor 41 that is rotatable with respect to the valve seat member 155, a valve member 30 that faces the valve seat 158 and moves toward the valve seat 158 when the rotor 41 rotates in the first direction, and a stopper mechanism 49 that restricts the rotation of the rotor 41 in the first direction when the rotor 41 is at a reference position Rx. The stator unit 107E includes a stator 60 that is disposed coaxially with the rotor 41 and constitutes the stepping motor 66 together with the rotor 41. The electric valve 4 includes the mounting position in which the stator unit 107E is mounted on the valve body 110E. The electric valve 4 includes the mounting positions in which the rotor unit 106 is mounted on the valve body 110E, the mounting positions being referred to as "rotor unit mounting positions". Where θ represents the step angle of the stepping motor 66, M represents the number of excitation patterns of the stepping motor 66, and K represents the number of the rotor unit mounting positions, the angle dβ[j] (j = 1, 2, ..., K - 1) around the axis L between a j-th rotor unit mounting position and a (j + 1)-th rotor unit mounting position is a multiple of the step angle θ, and the expression (3) is satisfied.

With this configuration, the angle dβ around the axis L between one rotor unit mounting position and another rotor unit mounting position adjacent to the one rotor unit mounting position can be prevented from being a multiple of a number that is the number M of the excitation patterns multiplied by the step angle θ. Therefore, the rotor unit 106 is mounted on the valve body 110E in another rotor unit mounting position instead of the one rotor unit mounting position, thereby enabling the position of the rotor 41 when pulse P corresponding to the specific excitation pattern is input to the stepping motor to be changed by a multiple of the step angle θ. The step angle θ corresponds to one pulse P to be input to the stepping motor 66. As a result, when a valve opening pulse number C is greater or less than a reference number Cs in the electric valve 4, the rotor unit 106 is mounted in another rotor unit mounting position instead of the one rotor unit mounting position. This enables the valve opening pulse number C to be adjusted. Accordingly, it is possible to decrease the variation in the valve opening pulse number C among electric valves 4.

The angle β[k] (k = 1, 2, ..., K) of a k-th rotor unit mounting position around the axis L is represented by the expression (4A).

With this configuration, the angle of the stator 60 around the axis L with respect to the rotor unit 106 can be changed by the step angle θ by changing the rotor unit mounting position in which the rotor unit 106 is mounted. Therefore, when the valve opening pulse number C is greater or less than the reference number Cs in the electric valve 4, the rotor unit 106 is mounted in another rotor unit mounting position instead of the present rotor unit mounting position. This enables the valve opening pulse number C to be adjusted. Accordingly, it is possible to decrease the variation in the valve opening pulse number C among the electric valves 4. The angleβ[k] may be represented by the following expression (4'). $β \left[k\right] = \left(M\times N-1\right) \times \left(k-1\right) \times θ$ (4')

The valve body 110E includes the mounting hole 114 with an internal thread 114c, and the internal thread 114c is disposed on the inner circumferential surface of the mounting hole 114. The rotor unit 106 includes the mounting member 150 with an external thread 150c, and the external thread 150c is disposed on the outer circumferential surface of the mounting member 150 and screwed into the internal thread 114c. The mounting member 150 holds the valve seat member 155. The mounting member 150 is disposed coaxially with the rotor 41. Eight spacers 187 can be located between the valve body 110E and the mounting member 150, and at least one spacer 187 is located between the valve body 110E and the mounting member 150. The rotational angle of the mounting member 150 around the axis L corresponding to the thickness per spacer 187 when the external thread 150c is screwed into the internal thread 114c is the step angle θ. Therefore, the number of the spacer(s) 187 is changed and the rotor unit mounting position in which the rotor unit is mounted is changed, thereby enabling the valve opening pulse number C to vary. As a result, the valve opening pulse number C of the electric valve 4 can be adjusted to a reference number Cs.

### (Fifth Embodiment)

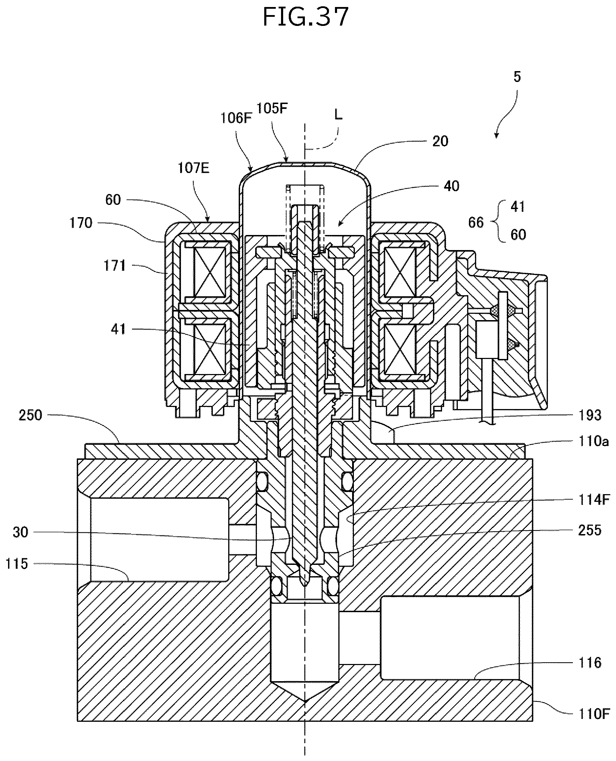

An electric valve according to a fifth embodiment of the present invention is described below with reference to Fig. 37 to Fig. 41.

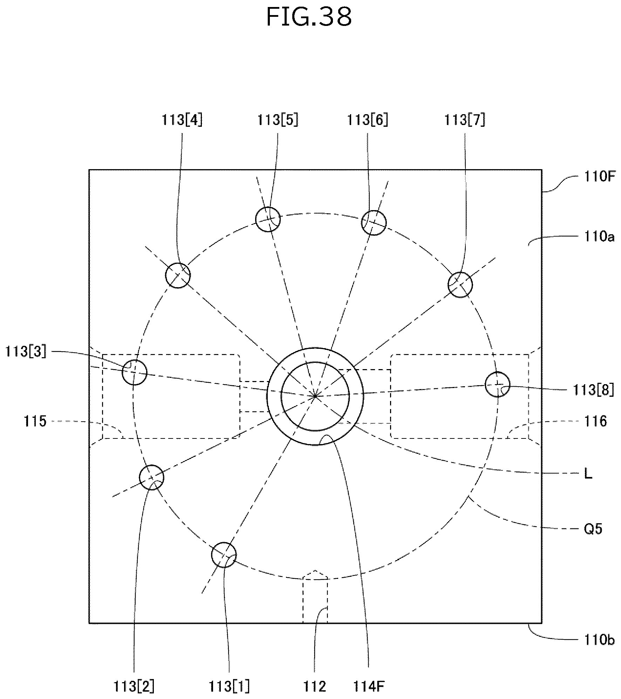

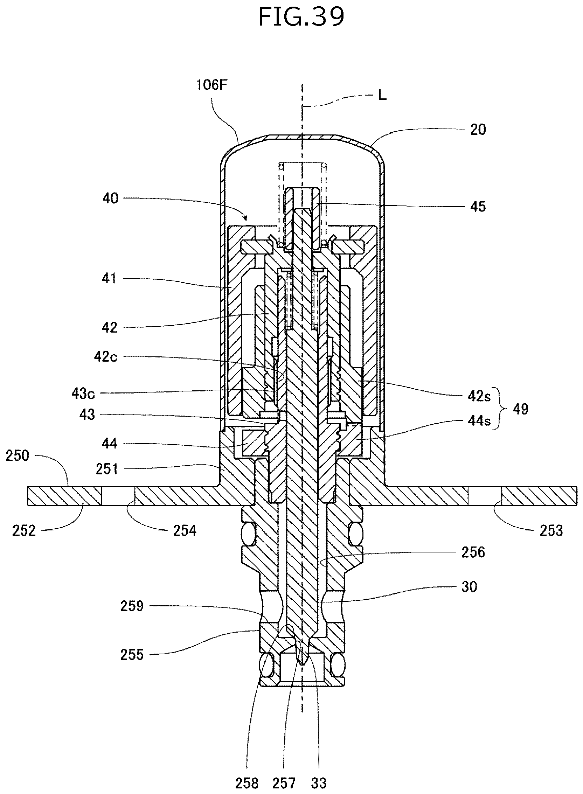

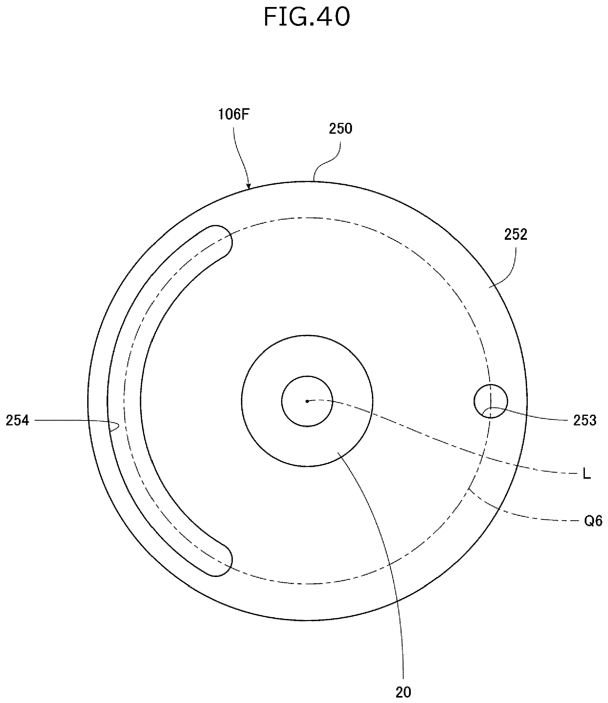

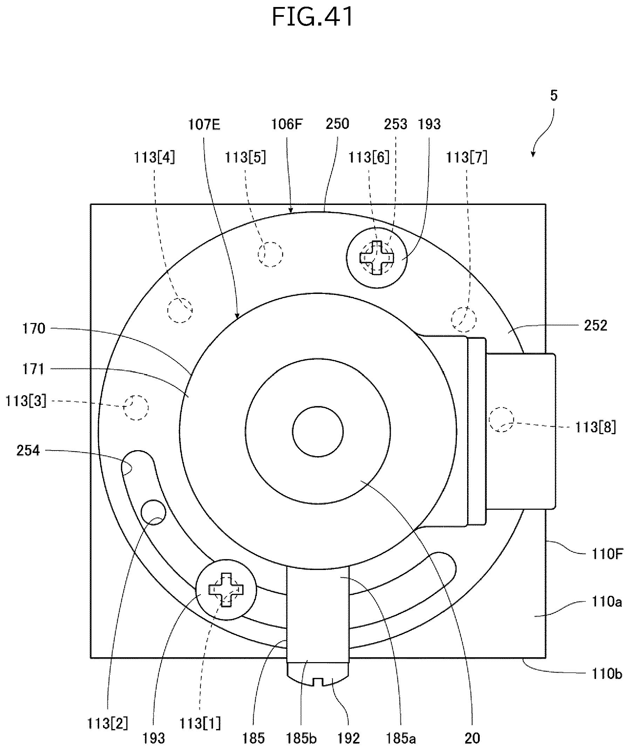

Fig. 37 is a sectional view of an electric valve according to a fifth embodiment of the present invention. Fig. 38 is a plan view of a valve body of the electric valve in Fig. 37. Fig. 39 is a sectional view of a rotor unit of the electric valve in Fig. 37. Fig. 40 is a plan view of the rotor unit in Fig. 39. Fig. 41 is a plan view of the electric valve in Fig. 37. In the description below, elements having the same configurations as those of the electric valves 1, 3, and 4 are denoted by the same reference signs as those of the electric valves 1, 3, and 4, and detailed descriptions of these elements are omitted.

As illustrated in Fig. 37 to Fig. 41, an electric valve 5 according to the fifth embodiment includes a valve body 110F, a rotor unit 106F, a stator unit 107E, a threaded member 192, and a threaded member 193. The valve body 110F, the rotor unit 106F, and the threaded member 193 are members of a valve body assembly 105F.

The valve body 110F has the same configuration as that of the valve body 110 described above except that (a) the valve body 110F has, instead of the multiple internal thread holes 111, multiple internal thread holes 113 and an internal thread hole 112, and (b) the valve body 110F has a mounting hole 114F without an internal thread instead of the mounting hole 114 with the internal thread 114c.

As illustrated in Fig. 38, the valve body 110F has the multiple internal thread holes 113. The multiple internal thread holes 113 are in an upper surface 110a of the valve body 110F. The inner circumferential surface of each internal thread hole 113 has an internal thread. In the present embodiment, the valve body 110F has 8 internal thread holes 113 (internal thread holes 113[1] to 113[8]). The internal thread holes 113[1] to 113[8] are on a circle Q5. An axis L passes through the center of the circle Q5. The valve body 110F has the internal thread hole 112. The internal thread hole 112 is in a front surface 110b of the valve body 110F.

The stator unit 107E includes a mounting tab 185. The mounting tab 185 is fixed to the valve body 110F by the threaded member 192 being disposed in a hole 186 in a second end portion of the mounting tab 185 and screwed into the internal thread hole 112 of the valve body 110F, and the stator unit 107E is positioned with respect to the valve body 110F. The electric valve 5 includes a mounting position in which the stator unit 107E is mounted on the valve body 110F.

The rotor unit 106F has the same configuration as that of the rotor unit 106 described above except that the rotor unit 106F includes a mounting member 250 and a valve seat member 255 instead of the mounting member 150 and the valve seat member 155.

The mounting member 250 integrally includes a cylindrical portion 251 and a disc portion 252. A lower end portion of a can 20 is bonded to the upper part of the cylindrical portion 251. The disc portion 252 is provided coaxially and continuously with the lower part of the cylindrical portion 251. The disc portion 252 has a hole 253 and a hole 254. The hole 253 has a circular shape and extends through the disc portion 252. The hole 254 has a circular arc shape. The hole 254 extends through the disc portion 252. The hole 253 and the hole 254 are on a circle Q6. The diameter of the circle Q6 is equal to the diameter of the circle Q5. The axis L passes through the center of the circle Q6. The disc portion 252 is disposed on the upper surface 110a of the valve body 110F.

The valve seat member 255 has a circular cylindrical shape. The valve seat member 255 includes a valve chamber 256. The valve seat member 255 includes a valve port 257 and a valve seat 258 that encloses the valve port 257. The valve seat member 255 is press-fitted upward into the mounting member 250 from the bottom. The upper part of the valve seat member 255 is held by the mounting member 250. A guide bush 43 is press-fitted into the upper part of the valve seat member 255. The lower part of the valve seat member 255 is disposed in the mounting hole 114F of the valve body 110F. The valve seat member 255 has a lateral hole 259 that connects the valve chamber 256 and the mounting hole 114F. The valve chamber 256 is connected to a flow channel 115 via the lateral hole 259 and the mounting hole 114F. The valve chamber 256 is connected to a flow channel 116 via the valve port 257. A valve portion 33 of a valve member 30 is disposed in the valve port 257. A variable throttle is formed between the valve portion 33 and the valve port 257. The valve portion 33 faces the valve seat 258. The valve port 257 is closed when the valve portion 33 is in contact with the valve seat 258. The central axis of the mounting member 250 and the central axis of the valve seat member 255 are aligned with the axis L.

The hole 253 of the disc portion 252 can be disposed in any of the internal thread holes 113[1] to 113[8] of the valve body 110F. Specifically, when the rotor unit 106F is rotated around the axis L clockwise in plan view, the position of the hole 253 matches with the positions of the internal thread holes 113[1] to 113[8] in order. When the threaded member 193 is disposed in the hole 253 and is screwed into any one of the internal thread holes 113[1] to 113[8], the disc portion 252 is fixed to the valve body 110F. When another threaded member 193 is disposed in the hole 254 and is screwed into another internal thread hole 113 of the internal thread holes 113[1] to 113[8], the disc portion 252 is more securely fixed to the valve body 110F. Consequently, the rotor unit 106F is positioned with respect to the valve body 110F. The electric valve 5 includes multiple mounting positions in which the rotor unit 106F is mounted on the valve body 110F, the mounting positions are referred to as "rotor unit mounting positions", and the rotor unit mounting positions correspond to the internal thread holes 113[1] to 113[8].

In the present embodiment,
1: when an angle β[1] of the internal thread hole 113[1] around the axis L is 0 degrees,
2: an angle β[2] of the internal thread hole 113[2] around the axis L is 33.75 degrees in a first direction,
3: an angle β[3] of the internal thread hole 113[3] around the axis L is 67.5 degrees in the first direction,
4: an angle β[4] of the internal thread hole 113[4] around the axis L is 101.25 degrees in the first direction,
5: an angle β[5] of the internal thread hole 113[5] around the axis L is 135 degrees in the first direction,
6: an angle β[6] of the internal thread hole 113[6] around the axis L is 168.75 degrees in the first direction,
7: an angle β[7] of the internal thread hole 113[7] around the axis L is 202.5 degrees in the first direction, and
8: an angle β[8] of the internal thread hole 113[8] around the axis L is 236.25 degrees in the first direction.
The angles of the internal thread holes 113[1] to 113[8] around the axis L increase by 33.75 degrees in the first direction.

In the internal thread holes 113[1] to 113[8], an angle dβ[j] (j = 1 to 8) around the axis L between a j-th internal thread hole 113[j] and a (j + 1)-th internal thread hole 113[j + 1] is 33.75 degrees. An angle around the axis L between the rotor unit 106F with the hole 253 aligned with the internal thread hole 113[j] and the rotor unit 106F with the hole 253 aligned with the internal thread hole 113[j + 1] is the angle dβ[j].

In the present embodiment, the angle dβ[j] around the axis L between any two internal thread holes 113 adjacent to each other is 33.75 degrees. It is sufficient that the angle dβ[j] be a multiple of the step angle θ and satisfy the expression (3). Respective angles dβ[j] may be different from each other.

The angle β[k] (k = 1 to 8) of a k-th internal thread hole 113[k] around the axis L is represented by the following expression (4B). The step angle θ of a stepping motor 66 is 3.75 degrees, the number M of excitation patterns is 8, and the integer N is 1.$β \left[k\right] = \left(M\times N+1\right) \times \left(k-1\right) \times θ = \left(k-1\right) \times 33.75$

The electric valve 5 according to the fifth embodiment also has the same (including substantially the same) functions and effects as those of the electric valve 4 described above. In the electric valve 5, the rotor unit mounting position in which the rotor unit 106F is mounted is changed, thereby enabling a valve opening pulse number C to vary. As a result, the valve opening pulse number C of the electric valve 5 can be adjusted to a reference number Cs.

The electric valve 5 includes the threaded member 193 with an external thread. The valve body 110F includes the multiple internal thread holes 113 corresponding to the rotor unit mounting positions. The rotor unit 106F includes the hole 253 that can be aligned with any one of the internal thread holes 113. The rotor unit 106F is mounted on the valve body 110F in one of the rotor unit mounting positions corresponding to one of the internal thread holes 113 by the threaded member 193 being disposed in the hole 253 and screwed into the one of the internal thread holes 113. As a result, with a relatively simple configuration, the rotor unit 106F can be mounted on the valve body 110F.

The electric valve 5 may have a configuration in which the rotor unit 106F includes multiple through holes corresponding to the rotor unit mounting positions, the valve body 110F includes an internal thread hole that can be aligned with any one of the through holes, and the rotor unit is mounted on the valve body 110F in one of the rotor unit mounting positions corresponding to one of the through holes by the threaded member 193 being disposed in the one of the through holes and screwed into the internal thread hole.

In the first embodiment, the mounting tab 80 is electrically connected to the yoke of the B-phase stator 62 via the conductive member 76. The mounting tab 80 may be directly connected to the yoke of the B-phase stator 62. The mounting tab 80 may, for example, be welded to or be in contact with the yoke of the B-phase stator 62. Alternatively, the mounting tab 80 may be integrally formed with the yoke of the B-phase stator 62 when the yoke is formed by press work. When an electrical connection between the mounting tab 80 and the yoke of the B-phase stator 62 is not required, the mounting tab 80 or the conductive member 76 to which the mounting tab 80 is bonded may be fixed only to the housing 70. Regarding the electrical connection, the mounting tab 85, the mounting tab 180, and the mounting tab 185 of the second embodiment to the fifth embodiment are also the same as or similar to the mounting tab 80.

In this specification, terms indicating shapes of members, such as "circular cylindrical" and "rectangular parallelepiped", are also used for members substantially having the shapes indicated by the terms. For example, "a circular cylindrical member" includes a circular cylindrical member and a substantially circular cylindrical member.

The embodiments of the present invention are described above. The present invention, however, is not limited to these embodiments. Embodiments obtained by a person skilled in the art appropriately adding, removing, or modifying components according to the embodiments described above, and an embodiment obtained by appropriately combining features of the embodiments are included in the scope of the present invention without departing from the scope of the present invention as defined by the appended claims.

### Reference Signs List

### (First Embodiment)

1 ... electric valve, 5A ... valve body assembly, 5B ... valve body assembly, 5C ... valve body assembly, 7 ... stator unit, 10 ... valve body, 11 ... body member, 11a ... fitting hole, 11b ...stem hole, 11d ... planar surface, 13 ... connection member, 14 ...valve chamber, 15 ... first conduit, 16 ... second conduit, 17 ... valve port, 18 ... valve seat, 20 ... can, 23a ... lower surface, 23A ... mounting plate, 23B ... mounting plate, 23C ... mounting plate, 24 ... hole, 25 ... hole, 26 ... hole, 30 ... valve member, 31 ... first stem portion, 32 ...second stem portion, 33 ... valve portion, 34 ... step portion, 40 ... driving section, 41 ...rotor, 41a ... fitting hole, 41s ... magnetic pole, 42 ... valve stem holder, 42a ... upper wall portion, 42b ... stem hole, 42c ... internal thread, 42s ... movable stopper, 43 ... guide bush, 43a ... base portion, 43b ... support portion, 43c ... external thread, 43d ... planar surface, 44 ... stopper member, 44a ... stopper body, 44c ... internal thread, 44s ... fixed stopper, 45 ... fixed member, 45a ... fixed portion, 45b ... flange portion, 46 ... washer, 47 ... valve closing spring, 48 ... return spring, 49 ... stopper mechanism, 60 ... stator, 61 ... A-phase stator, 61a ... pole teeth, 61b ... pole teeth, 61c ... coil, 61s ... pole tooth, 62 ... B-phase stator, 62a ... pole teeth, 62b ... pole teeth, 62c ... coil, 62s ... pole tooth, 66 ... stepping motor, 70 ... housing, 71 ... peripheral wall portion, 72 ... upper wall portion, 74 ... inner space, 76 ... conductive member, 80 ... mounting tab, 80a ... first end portion, 80b ... second end portion, 81 ... projecting portion, A1 ... terminal, A2 ... terminal, B1 ... terminal, B2 ... terminal, C ... valve opening pulse number, Cs ... reference number, L ... axis, P ... pulse, Rc ... valve closing position, Ro ... valve opening position, Rx ... reference position, θ ... step angle

### (Second Embodiment)

2 ... electric valve, 5D ... valve body assembly, 5E ... valve body assembly, 5F ... valve body assembly, 7D ... stator unit, 27 ... projecting portion, 28 ... recess, 29 ... recess, 85 ... mounting tab, 85a ... first end portion, 85b ... second end portion, 86 ... hole

### (Third Embodiment)

3 ... electric valve, 105 ... valve body assembly, 106 ... rotor unit, 107 ... stator unit, 110 ... valve body, 110a ... upper surface, 111 ... internal thread hole, 114 ... mounting hole, 114c ... internal thread, 115 ... flow channel, 116 ... flow channel, 150 ... mounting member, 150c ... external thread, 155 ... valve seat member, 156 ... valve chamber, 157 ... valve port, 158 ... valve seat, 159 ... lateral hole, 170 ... housing, 171 ... peripheral wall portion, 176 ... conductive member, 180 ... mounting tab, 180a ... first end portion, 180b ... second end portion, 181 ... hole, 191 ... threaded member

### (Fourth Embodiment)

4 ... electric valve, 105E ... valve body assembly, 106 ... rotor unit, 107E ... stator unit, 110E ... valve body, 112 ... internal thread hole, 185 ... mounting tab, 185a ... first end portion, 185b ... second end portion, 186 ... hole, 187 ... spacer, 192 ... threaded member, 193 ... threaded member

### (Fifth Embodiment)

5 **...** electric valve, 105F **...** valve body assembly, 106F ... rotor unit, 107E ... stator unit, 110F ... valve body, 112 ... internal thread hole, 113 ... internal thread hole, 114F ... mounting hole, 192 ... threaded member, 193 ... threaded member, 250 ... mounting member, 251 ... cylindrical portion, 252 ... disc portion, 253 ... hole, 254 ... hole, 255 ... valve seat member, 256 ... valve chamber, 257 ... valve port, 258 ... valve seat, 259 ... lateral hole

## Claims

1. An electric valve (1, 2, 3) comprising:
a valve body assembly (5A, 5B, 5C, 5D, 5E, 5F, 105); and
a stator unit (7, 7D, 107) that is mounted on the valve body assembly (5A, 5B, 5C, 5D, 5E, 5F, 105),
wherein the valve body assembly (5A, 5B, 5C, 5D, 5E, 5F, 105) includes a valve body (10, 110) that includes a valve seat (18, 158), a rotor (41) that is rotatable with respect to the valve body (10, 110) around an axis (L), a valve member (30) that faces the valve seat (18, 158) and moves toward the valve seat (18, 158) when the rotor (41) rotates in a first direction, and a stopper mechanism (49) that restricts rotation of the rotor (41) in the first direction when the rotor (41) is at a reference position,
wherein the stator unit (7, 7D, 107) includes a stator (60) that is disposed coaxially with the rotor (41) along the axis (L) and constitutes a stepping motor (66) together with the rotor (41),
wherein the electric valve (1, 2, 3) includes mounting positions in which the stator unit (7, 7D, 107) is mounted on the valve body assembly (5A, 5B, 5C, 5D, 5E, 5F, 105), the mounting positions being referred to as stator unit mounting positions, and
**characterized in that** where θ represents a step angle of the stepping motor (66), M represents a number of excitation patterns of the stepping motor (66), K represents a number of the stator unit mounting positions, and U represents any integer, an angle dα[j] (j = 1, 2, ..., K - 1) around the axis (L) between a j-th stator unit mounting position of the stator unit mounting positions and a (j + 1)-th stator unit mounting position of the stator unit mounting positions is a multiple of the step angle θ, and a following expression (1) is satisfied. $dα \left[j\right] \neq M \times θ \times U$ (1)

2. The electric valve (1, 2, 3) according to Claim 1, wherein an angle α[k] (k = 1, 2, ..., K) of a k-th stator unit mounting position of the stator unit mounting positions around the axis (L) is represented by one of the following expressions (2) or (2') $α \left[k\right] = \left(M\times N+1\right) \times \left(k-1\right) \times θ$ (2) $α \left[k\right] = \left(M\times N-1\right) \times \left(k-1\right) \times θ$ (2') where N represents an integer.

3. The electric valve (1, 2) according to Claim 1 or Claim 2,
wherein the valve body assembly (5A, 5B, 5C, 5D, 5E, 5F) includes receiving portions corresponding to the stator unit mounting positions,
wherein the stator unit (7, 7D) includes a mounting portion capable of being aligned with any one of the receiving portions,
wherein the mounting portion is a projection (81) and the receiving portions are recesses (28, 29) or holes (24, 25, 26), or the mounting portion is a recess (28, 29) or a hole (86) and the receiving portions are projections (27), and
wherein the stator unit (7, 7D) is mounted in one of the stator unit mounting positions corresponding to one of the receiving portions by the mounting portion being secured to the one of the receiving portions.

4. The electric valve (3) according to Claim 1 or Claim 2,
wherein the electric valve (3) includes a threaded member (191) with an external thread,
wherein the valve body assembly (105) includes internal thread holes (111) corresponding to the stator unit mounting positions,
wherein the stator unit (107) includes a through hole (181) capable of being aligned with any one of the internal thread holes (111), and
wherein the stator unit (107) is mounted in one of the stator unit mounting positions corresponding to one of the internal thread holes (111) by the threaded member (191) being disposed in the through hole (181) and screwed into the one of the internal thread holes (111).

5. An electric valve (4, 5) comprising:
a valve body (110E, 110F);
a rotor unit (106, 106F) that is mounted on the valve body (110E, 110F); and
a stator unit (107E) that is mounted on the valve body (110E, 110F),
wherein the rotor unit (106, 106F) includes a valve seat member (155, 255) that includes a valve seat (158, 258), a rotor (41) that is rotatable with respect to the valve seat member (155, 255) around an axis (L), a valve member (30) that faces the valve seat (158, 258) and moves toward the valve seat (158, 258) when the rotor (41) rotates in a first direction, and a stopper mechanism (49) that restricts rotation of the rotor (41) in the first direction when the rotor (41) is at a reference position,
wherein the stator unit (107E) includes a stator (60) that is disposed coaxially with the rotor (41) along the axis (L) and constitutes a stepping motor (66) together with the rotor (41),
wherein the electric valve (3, 4, 5) includes a mounting position in which the stator unit (107, 107E) is mounted on the valve body (110, 110E, 110F),
wherein the electric valve (4, 5) includes mounting positions in which the rotor unit (106, 106F) is mounted on the valve body (110E, 110F), the mounting positions being referred to as rotor unit mounting positions, and
**characterized in that** where θ represents a step angle of the stepping motor (66), M represents a number of excitation patterns of the stepping motor (66), K represents a number of the rotor unit mounting positions, and U represents any integer, an angle dβ[j] (j = 1, 2, ..., K - 1) around an axis between a j-th rotor unit mounting position of the rotor unit mounting positions and a (j + 1)-th rotor unit mounting position of the rotor unit mounting positions is a multiple of the step angle θ, and a following expression (3) is satisfied. $dβ \left[j\right] \neq M \times θ \times U$ (3)

6. The electric valve (4, 5) according to Claim 5, wherein an angle β[k] (k = 1, 2, ..., K) of a k-th rotor unit mounting position of the rotor unit mounting positions around the axis (L) is represented by one of the following expressions (4) or (4') $β \left[k\right] = \left(M\times N+1\right) \times \left(k-1\right) \times θ$ (4) $β \left[k\right] = \left(M\times N-1\right) \times \left(k-1\right) \times θ$ (4') where N is an integer.

7. The electric valve (4) according to Claim 5 or Claim 6,
wherein the valve body (110E) includes a mounting hole (114) with an internal thread (114c), the internal thread (114c) being disposed on an inner circumferential surface of the mounting hole (114),
wherein the rotor unit (106) includes a mounting member (150) with an external thread (150c), the external thread (150c) being disposed on an outer circumferential surface of the mounting member (150) and screwed into the internal thread (114c), and the mounting member (150) holds the valve seat member (155),
wherein the mounting member (150) is disposed coaxially with the rotor (41),
wherein where K represents the number of the rotor unit mounting positions, up to K spacers (187) are located between the valve body (110E) and the mounting member (150), and at least one spacer is located between the valve body (110E) and the mounting member (150), and
wherein the step angle is equal to a rotational angle of the mounting member (150) around the axis corresponding to a thickness per spacer (187) when the external thread (150c) is screwed into the internal thread (114c).

8. The electric valve (5) according to Claim 5 or Claim 6,
wherein the electric valve (5) includes a threaded member with an external thread,
wherein the valve body (110F) includes internal thread holes (113) corresponding to the rotor unit mounting positions,
wherein the rotor unit (106F) includes a through hole (253) capable of being aligned with any one of the internal thread holes (113), and
wherein the rotor unit (106F) is mounted in one of the rotor unit mounting positions corresponding to one of the internal thread holes (113) by the threaded member (193) being disposed in the through hole (253) and screwed into the one of the internal thread holes (113).

9. The electric valve (5) according to Claim 5 or Claim 6,
wherein the electric valve (5) includes a threaded member with an external thread,
wherein the rotor unit (106F) includes through holes corresponding to the rotor unit mounting positions,
wherein the valve body (110F) includes an internal thread hole capable of being aligned with any one of the through holes, and
wherein the rotor unit (106F) is mounted in one of the rotor unit mounting positions corresponding to one of the through holes by the threaded member being disposed in the one of the through holes and screwed into the internal thread hole.

## Patentansprüche

1. Elektrisches Ventil (1, 2, 3), umfassend:
eine Ventilkörperanordnung (5A, 5B, 5C, 5D, 5E, 5F, 105); und
eine Statoreinheit (7, 7D, 107), die an der Ventilkörperanordnung (5A, 5B, 5C, 5D, 5E, 5F, 105) montiert ist,
wobei die Ventilkörperanordnung (5A, 5B, 5C, 5D, 5E, 5F, 105) einen Ventilkörper (10, 110), der einen Ventilsitz (18, 158) beinhaltet, einen Rotor (41), der in Bezug auf den Ventilkörper (10, 110) um eine Achse (L) drehbar ist, ein Ventilelement (30), das dem Ventilsitz (18, 158) zugewandt ist und sich in Richtung des Ventilsitzes (18, 158) bewegt, wenn sich der Rotor (41) in einer ersten Richtung dreht, und einen Anschlagsmechanismus (49), der die Drehung des Rotors (41) in der ersten Richtung beschränkt, wenn sich der Rotor (41) an einer Referenzposition befindet, beinhaltet,
wobei die Statoreinheit (7, 7D, 107) einen Stator (60) beinhaltet, der koaxial mit dem Rotor (41) entlang der Achse (L) angeordnet ist und zusammen mit dem Rotor (41) einen Schrittmotor (66) bildet,
wobei das elektrische Ventil (1, 2, 3) Montagepositionen beinhaltet, in denen die Statoreinheit (7, 7D, 107) an der Ventilkörperanordnung (5A, 5B, 5C, 5D, 5E, 5F, 105) montiert ist, wobei die Montagepositionen als Statoreinheit-Montagepositionen bezeichnet werden, und
**dadurch gekennzeichnet, dass**, wenn θ einen Schrittwinkel des Schrittmotors (66) darstellt, M eine Anzahl von Erregungsmustern des Schrittmotors (66) darstellt, K eine Anzahl der Statoreinheit-Montagepositionen darstellt und U eine beliebige ganze Zahl darstellt, ein Winkel dα[j] (j = 1, 2, ..., K - 1) um die Achse (L) zwischen einer j-ten Statoreinheit-Montageposition der Statoreinheit-Montagepositionen und einer (j + 1)-ten Statoreinheit-Montageposition der Statoreinheit-Montagepositionen ein Vielfaches des Schrittwinkels θ ist und der folgende Ausdruck (1) erfüllt ist: $dα \left[j\right] \neq M \times θ \times U$ (1)

2. Elektrisches Ventil (1, 2, 3) nach Anspruch 1, wobei ein Winkel α[k] (k = 1, 2, ..., K) einer k-ten Statoreinheit-Montageposition der Statoreinheit-Montagepositionen um die Achse (L) durch einen der folgenden Ausdrücke (2) oder (2') dargestellt wird: $α \left[k\right] = \left(M\times N+1\right) \times \left(k-1\right) \times θ$ (2) $α \left[k\right] = \left(M\times N-1\right) \times \left(k-1\right) \times θ$ (2') wobei N eine ganze Zahl darstellt.

3. Elektrisches Ventil (1, 2) nach Anspruch 1 oder Anspruch 2,
wobei die Ventilkörperanordnung (5A, 5B, 5C, 5D, 5E, 5F) Aufnahmeabschnitte beinhaltet, die den Statoreinheit-Montagepositionen entsprechen,
wobei die Statoreinheit (7, 7D) einen Montageabschnitt beinhaltet, der mit einem beliebigen der Aufnahmeabschnitte ausgerichtet werden kann,
wobei der Montageabschnitt ein Vorsprung (81) ist und die Aufnahmeabschnitte Aussparungen (28, 29) oder Löcher (24, 25, 26) sind, oder der Montageabschnitt eine Aussparung (28, 29) oder ein Loch (86) ist und die Aufnahmeabschnitte Vorsprünge (27) sind, und
wobei die Statoreinheit (7, 7D) in einer der Statoreinheit-Montagepositionen montiert ist, die einem der Aufnahmeabschnitte entspricht, indem der Montageabschnitt an dem einen der Aufnahmeabschnitte befestigt ist.

4. Elektrisches Ventil (3) nach Anspruch 1 oder Anspruch 2,
wobei das elektrische Ventil (3) ein Gewindeelement (191) mit einem Außengewinde beinhaltet, wobei die Ventilkörperanordnung (105) Innengewindelöcher (111) beinhaltet, die den Statoreinheit-Montagepositionen entsprechen,
wobei die Statoreinheit (107) ein Durchgangsloch (181) beinhaltet, das mit einem beliebigen der Innengewindelöcher (111) ausgerichtet werden kann, und
wobei die Statoreinheit (107) in einer der Statoreinheit-Montagepositionen montiert ist, die einem der Innengewindelöcher (111) entspricht, indem das Gewindeelement (191) in dem Durchgangsloch (181) angeordnet und in das eine der Innengewindelöcher (111) geschraubt wird.

5. Elektrisches Ventil (4, 5), umfassend:
einen Ventilkörper (110E, 110F);
eine Rotoreinheit (106, 106F), die an dem Ventilkörper (110E, 110F) montiert ist; und
eine Statoreinheit (107E), die an dem Ventilkörper (110E, 110F) montiert ist,
wobei die Rotoreinheit (106, 106F) ein Ventilsitzelement (155, 255), das einen Ventilsitz (158, 258) beinhaltet, einen Rotor (41), der in Bezug auf das Ventilsitzelement (155, 255) um eine Achse (L) drehbar ist, ein Ventilelement (30), das dem Ventilsitz (158, 258) zugewandt ist und sich in Richtung des Ventilsitzes (158, 258) bewegt, wenn sich der Rotor (41) in einer ersten Richtung dreht, und einen Anschlagsmechanismus (49), der die Drehung des Rotors (41) in der ersten Richtung beschränkt, wenn sich der Rotor (41) an einer Referenzposition befindet, beinhaltet,
wobei die Statoreinheit (107E) einen Stator (60) beinhaltet, der koaxial mit dem Rotor (41) entlang der Achse (L) angeordnet ist und zusammen mit dem Rotor (41) einen Schrittmotor (66) bildet,
wobei das elektrische Ventil (3, 4, 5) eine Montageposition beinhaltet, in der die Statoreinheit (107, 107E) an dem Ventilkörper (110, 110E, 110F) montiert ist,
wobei das elektrische Ventil (4, 5) Montagepositionen beinhaltet, in denen die Rotoreinheit (106, 106F) an dem Ventilkörper (HOE, 110F) montiert ist, wobei die Montagepositionen als Rotoreinheit-Montagepositionen bezeichnet werden, und
**dadurch gekennzeichnet, dass**, wenn θ einen Schrittwinkel des Schrittmotors (66) darstellt, M eine Anzahl von Erregungsmustern des Schrittmotors (66) darstellt, K eine Anzahl der Rotoreinheit-Montagepositionen darstellt und U eine beliebige ganze Zahl darstellt, ein Winkel dβ[j] (j = 1, 2, ..., K - 1) um eine Achse zwischen einer j-ten Rotoreinheit-Montageposition der Rotoreinheit-Montagepositionen und einer (j + 1)-ten Rotoreinheit-Montageposition der Rotoreinheit-Montagepositionen ein Vielfaches des Schrittwinkels θ ist und der folgende Ausdruck (3) erfüllt ist: $dβ \left[j\right] \neq M \times θ \times U$ (3)

6. Elektrisches Ventil (4, 5) nach Anspruch 5, wobei ein Winkel β[k] (k = 1, 2, ..., K) einer k-ten Rotoreinheit-Montageposition der Rotoreinheit-Montagepositionen um die Achse (L) durch einen der folgenden Ausdrücke (4) oder (4') dargestellt wird: $β \left[k\right] = \left(M\times N+1\right) \times \left(k-1\right) \times θ$ (4) $β \left[k\right] = \left(M\times N-1\right) \times \left(k-1\right) \times θ ,$ (4') wobei N eine ganze Zahl ist.

7. Elektrisches Ventil (4) nach Anspruch 5 oder Anspruch 6,
wobei der Ventilkörper (110E) ein Montageloch (114) mit einem Innengewinde (114c) beinhaltet, wobei das Innengewinde (114c) an einer Innenumfangsfläche des Montagelochs (114) angeordnet ist,
wobei die Rotoreinheit (106) ein Montageelement (150) mit einem Außengewinde (150c) beinhaltet, wobei das Außengewinde (150c) an einer Außenumfangsfläche des Montageelements (150) angeordnet und in das Innengewinde (114c) geschraubt ist, und das Montageelement (150) das Ventilsitzelement (155) hält,
wobei das Montageelement (150) koaxial mit dem Rotor (41) angeordnet ist,
wobei, wenn K die Anzahl der Rotoreinheit-Montagepositionen darstellt, bis zu K Abstandshalter (187) zwischen dem Ventilkörper (110E) und dem Montageelement (150) angeordnet sind und mindestens ein Abstandshalter zwischen dem Ventilkörper (110E) und dem Montageelement (150) angeordnet ist, und
wobei der Schrittwinkel gleich einem Drehwinkel des Montageelements (150) um die Achse ist, der einer Dicke pro Abstandshalter (187) entspricht, wenn das Außengewinde (150c) in das Innengewinde (114c) geschraubt wird.

8. Elektrisches Ventil (5) nach Anspruch 5 oder Anspruch 6,
wobei das elektrische Ventil (5) ein Gewindeelement mit einem Außengewinde beinhaltet,
wobei der Ventilkörper (110F) Innengewindelöcher (113) beinhaltet, die den Rotoreinheit-Montagepositionen entsprechen,
wobei die Rotoreinheit (106F) ein Durchgangsloch (253) beinhaltet, das mit einem beliebigen der Innengewindelöcher (113) ausgerichtet werden kann, und
wobei die Rotoreinheit (106F) in einer der Rotoreinheit-Montagepositionen montiert ist, die einem der Innengewindelöcher (113) entspricht, indem das Gewindeelement (193) in dem Durchgangsloch (253) angeordnet und in das eine der Innengewindelöcher (113) geschraubt wird.

9. Elektrisches Ventil (5) nach Anspruch 5 oder Anspruch 6,
wobei das elektrische Ventil (5) ein Gewindeelement mit einem Außengewinde beinhaltet,
wobei die Rotoreinheit (106F) Durchgangslöcher beinhaltet, die den Rotoreinheit-Montagepositionen entsprechen,
wobei der Ventilkörper (110F) ein Innengewindeloch beinhaltet, das mit einem beliebigen der Durchgangslöcher ausgerichtet werden kann, und
wobei die Rotoreinheit (106F) in einer der Rotoreinheit-Montagepositionen montiert ist, die einem der Durchgangslöcher entspricht, indem das Gewindeelement in dem einen der Durchgangslöcher angeordnet und in das Innengewindeloch geschraubt wird.

## Revendications

1. Soupape électrique (1, 2, 3) comportant :
un ensemble de corps de soupape (5A, 5B, 5C, 5D, 5E, 5F, 105) ; et
une unité de stator (7, 7D, 107) qui est montée sur l'ensemble de corps de soupape (5A, 5B, 5C, 5D, 5E, 5F, 105),
dans laquelle l'ensemble de corps de soupape (5A, 5B, 5C, 5D, 5E, 5F, 105) inclut un corps de soupape (10, 110) qui inclut un siège de soupape (18, 158), un rotor (41) qui peut tourner par rapport au corps de soupape (10, 110) autour d'un axe (L), un élément de soupape (30) qui est dirigé vers le siège de soupape (18, 158) et se déplace vers le siège de soupape (18, 158) lorsque le rotor (41) tourne dans un premier sens, et un mécanisme de butée (49) qui restreint la rotation du rotor (41) dans le premier sens lorsque le rotor (41) est à une position de référence,
dans laquelle l'unité de stator (7, 7D, 107) inclut un stator (60) qui est disposé coaxialement au rotor (41) le long de l'axe (L) et constitue un moteur pas à pas (66) en association avec le rotor (41),
dans laquelle la soupape électrique (1, 2, 3) inclut des positions de montage dans lesquelles l'unité de stator (7, 7D, 107) est montée sur l'ensemble de corps de soupape (5A, 5B, 5C, 5D, 5E, 5F, 105), les positions de montage étant appelées positions de montage d'unité de stator, et
**caractérisée en ce que**, lorsque θ représente un angle de pas du moteur pas à pas (66), M représente un nombre de modèles d'excitation du moteur pas à pas (66), K représente un nombre de positions de montage d'unité de stator, et U représente un entier quelconque, un angle dα[j] (j = 1, 2, ..., K - 1) autour de l'axe (L) entre une j^{ème} position de montage d'unité de stator des positions de montage d'unité de stator et une (j + 1)^{ème} position de montage d'unité de stator des positions de montage d'unité de stator est un multiple de l'angle de pas θ, et une expression (1) suivante est satisfaite : $dα \left[j\right] \neq M \times θ \times U$ (1)

2. Soupape électrique (1, 2, 3) selon la revendication 1, dans laquelle un angle α[k] (k = 1, 2, ..., K) d'une k^{ème} position de montage d'unité de stator des positions de montage d'unité de stator autour de l'axe (L) est représenté par l'une des expressions (2) ou (2') suivantes : $α \left[k\right] = \left(M\times N+1\right) \times \left(k-1\right) \times θ$ (2) $α \left[k\right] = \left(M\times N-1\right) \times \left(k-1\right) \times θ$ (2') où N représente un entier.

3. Soupape électrique (1, 2) selon la revendication 1 ou la revendication 2,
dans laquelle l'ensemble de corps de soupape (5A, 5B, 5C, 5D, 5E, 5F) inclut des parties de réception correspondant aux positions de montage d'unité de stator,
dans laquelle l'unité de stator (7, 7D) inclut une partie de montage pouvant être alignée avec l'une quelconque des parties de réception,
dans laquelle la partie de montage est une saillie (81) et les parties de réception sont des évidements (28, 29) ou des trous (24, 25, 26), ou la partie de montage est un évidement (28, 29) ou un trou (86) et les parties de réception sont des saillies (27), et
dans laquelle l'unité de stator (7, 7D) est montée dans l'une des positions de montage d'unité de stator correspondant à l'une des parties de réception par la partie de montage étant fixée à l'une des parties de réception.

4. Soupape électrique (3) selon la revendication 1 ou la revendication 2,
dans laquelle la soupape électrique (3) inclut un élément fileté (191) avec un filetage extérieur,
dans laquelle l'ensemble de corps de soupape (105) inclut des trous taraudés (111) correspondant aux positions de montage d'unité de stator,
dans laquelle l'unité de stator (107) inclut un trou traversant (181) pouvant être aligné avec l'un quelconque des trous taraudés (111), et
dans laquelle l'unité de stator (107) est montée dans l'une des positions de montage d'unité de stator correspondant à l'un des trous taraudés (111) par l'élément fileté (191) étant disposé dans le trou traversant (181) et vissé dans l'un des trous taraudés (111).

5. Soupape électrique (4, 5) comportant :
un corps de soupape (110E, 110F) ;
une unité de rotor (106, 106F) qui est montée sur le corps de soupape (110E, 110F) ; et
une unité de stator (107E) qui est montée sur le corps de soupape (110E, 110F),
dans laquelle l'unité de rotor (106, 106F) inclut un élément de siège de soupape (155, 255) qui inclut un siège de soupape (158, 258), un rotor (41) qui peut tourner par rapport à l'élément de siège de soupape (155, 255) autour d'un axe (L), un élément de soupape (30) qui est dirigé vers le siège de soupape (158, 258) et se déplace vers le siège de soupape (158, 258) lorsque le rotor (41) tourne dans un premier sens, et un mécanisme de butée (49) qui restreint la rotation du rotor (41) dans le premier sens lorsque le rotor (41) est à une position de référence,
dans laquelle l'unité de stator (107E) inclut un stator (60) qui est disposé coaxialement au rotor (41) le long de l'axe (L) et constitue un moteur pas à pas (66) en association avec le rotor (41),
dans laquelle la soupape électrique (3, 4, 5) inclut une position de montage dans laquelle l'unité de stator (107, 107E) est montée sur le corps de soupape (110, 110E, 110F),
dans laquelle la soupape électrique (4, 5) inclut des positions de montage dans lesquelles l'unité de rotor (106, 106F) est montée sur le corps de soupape (110E, 110F), les positions de montage étant appelées positions de montage d'unité de rotor, et
**caractérisée en ce que**, lorsque θ représente un angle de pas du moteur pas à pas (66), M représente un nombre de modèles d'excitation du moteur pas à pas (66), K représente un nombre de positions de montage d'unité de rotor, et U représente un entier quelconque, un angle dβ[j] (j = 1, 2, ..., K - 1) autour d'un axe entre une j^{ème} position de montage d'unité de rotor des positions de montage d'unité de rotor et une (j + 1)^{ème} position de montage d'unité de rotor des positions de montage d'unité de rotor est un multiple de l'angle de pas θ, et une expression (3) suivante est satisfaite. $dβ \left[j\right] \neq M \times θ \times U$ (3)

6. Soupape électrique (4, 5) selon la revendication 5, dans laquelle un angle β[k] (k = 1, 2, ..., K) d'une k^{ème} position de montage d'unité de rotor des positions de montage d'unité de rotor autour de l'axe (L) est représenté par l'une des expressions (4) ou (4') suivantes : $β \left[k\right] = \left(M\times N+1\right) \times \left(k-1\right) \times θ$ (4) $β \left[k\right] = \left(M\times N-1\right) \times \left(k-1\right) \times θ$ (4') où N est un entier.

7. Soupape électrique (4) selon la revendication 5 ou la revendication 6,
dans laquelle le corps de soupape (110E) inclut un trou de montage (114) avec un filetage intérieur (114c), le filetage intérieur (114c) étant disposé sur une surface circonférentielle intérieure du trou de montage (114),
dans laquelle l'unité de rotor (106) inclut un élément de montage (150) avec un filetage extérieur (150c), le filetage extérieur (150c) étant disposé sur une surface circonférentielle extérieure de l'élément de montage (150) et vissé dans le filetage intérieur (114c), et l'élément de montage (150) maintient l'élément de siège de soupape (155),
dans laquelle l'élément de montage (150) est disposé coaxialement au rotor (41),
dans laquelle, lorsque K représente le nombre de positions de montage d'unité de rotor, jusqu'à K entretoises (187) sont situées entre le corps de soupape (110E) et l'élément de montage (150), et au moins une entretoise est située entre le corps de soupape (110E) et l'élément de montage (150), et
dans laquelle l'angle de pas est égal à un angle de rotation de l'élément de montage (150) autour de l'axe correspondant à une épaisseur par entretoise (187) lorsque le filetage extérieur (150c) est vissé dans le filetage intérieur (114c).

8. Soupape électrique (5) selon la revendication 5 ou la revendication 6,
dans laquelle la soupape électrique (5) inclut un élément fileté avec un filetage extérieur,
dans laquelle le corps de soupape (110F) inclut des trous taraudés (113) correspondant aux positions de montage d'unité de rotor,
dans laquelle l'unité de rotor (106F) inclut un trou traversant (253) pouvant être aligné avec l'un quelconque des trous taraudés (113), et
dans laquelle l'unité de rotor (106F) est montée dans l'une des positions de montage d'unité de rotor correspondant à l'un des trous taraudés (113) par l'élément fileté (193) étant disposé dans le trou traversant (253) et vissé dans l'un des trous taraudés (113).

9. Soupape électrique (5) selon la revendication 5 ou la revendication 6,
dans laquelle la soupape électrique (5) inclut un élément fileté avec un filetage extérieur,
dans laquelle l'unité de rotor (106F) inclut des trous traversants correspondant aux positions de montage d'unité de rotor,
dans laquelle le corps de soupape (110F) inclut un trou taraudé pouvant être aligné avec l'un quelconque des trous traversants, et
dans laquelle l'unité de rotor (106F) est montée dans l'une des positions de montage d'unité de rotor correspondant à l'un des trous traversants par l'élément fileté étant disposé dans l'un des trous traversants et vissé dans le trou taraudé.
